(19)

Europäisches
Patentamt
European
Patent Office
Office européen
des brevets

(11) **EP 2 538 201 A1**

(12) **EUROPEAN PATENT APPLICATION**
published in accordance with Art. 153(4) EPC

(43) Date of publication:
**26.12.2012 Bulletin 2012/52**

(21) Application number: **11744601.3**

(22) Date of filing: **14.02.2011**

(51) Int Cl.:
**G01N 21/61** (2006.01)     **G01N 21/35** (2006.01)

(86) International application number:
**PCT/JP2011/053040**

(87) International publication number:
**WO 2011/102315 (25.08.2011 Gazette 2011/34)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.02.2010   JP 2010031505
16.02.2010   JP 2010031561
16.02.2010   JP 2010031497**

(71) Applicant: **Hamamatsu Photonics K.K.
Hamamatsu-shi, Shizuoka 435-8558 (JP)**

(72) Inventors:
• **IZAWA Toshiyuki
Hamamatsu-shi
Shizuoka 435-8558 (JP)**
• **YAMAMOTO Koei
Hamamatsu-shi
Shizuoka 435-8558 (JP)**

(74) Representative: **HOFFMANN EITLE
Patent- und Rechtsanwälte
Arabellastrasse 4
81925 München (DE)**

(54) **GAS CONCENTRATION CALCULATION DEVICE, GAS CONCENTRATION MEASUREMENT MODULE, AND LIGHT DETECTOR**

(57)     A gas concentration measuring module (2X) includes a gas cell (10X) configured to form an introduction space (11X) into which a sample gas (50X) is introduced, an infrared light source (21X) disposed at one end of the gas cell (10X), a reference light receiving element (31X) and a signal light receiving element (32X) disposed at the other end of the gas cell (10X) and configured to receive infrared light emitted from the infrared light source (21X), and an inert gas chamber (40X) disposed on an optical path between the infrared light source (21X) and the reference light receiving element (31X) in the introduction space (11X) and in which an inert gas, inert with respect to the infrared light emitted from the infrared light source (21X) is hermetically enclosed. A calculation circuit (3X) calculates a concentration of carbon dioxide in the sample gas (50X) based on a ratio between an energy value of light received by the reference light receiving element (31X) and an energy value of infrared light received by the signal light receiving element (32X) of the gas concentration measuring module (2X).

*Fig.1*

EP 2 538 201 A1

## Description

### Technical Field

The present invention relates to a gas concentration calculating device and a gas concentration measuring module configured to calculate a concentration of a gas using an NDIR (non-dispersive infrared) method. In addition, the present invention relates to a photo detector configured to detect light on different optical paths.

### Background Art

In the related art, for example, a gas concentration calculating device for calculating a concentration of a gas such as carbon dioxide has been introduced in fields of an air-conditioning system, and so on. As ON/OFF of ventilation is controlled based on calculation results in the gas concentration calculating device, the air-conditioning system is efficiently operated and power consumption is reduced. Such a gas concentration calculating device uses an NDIR (non-dispersive infrared) method, and the NDIR method is a technique of calculating a concentration of a gas based on attenuation upon passage of infrared light through a target gas.

As the gas concentration calculating device using the NDIR method, for example, Patent Document 1 discloses a gas concentration calculating device, in which light from a single light source is irradiated into a gas cell, and the light passing through the gas cell is detected by a first detector and a second detector. The first detector detects light passing through an optical path constituted by a region for gas to be measured, and an inert gas region hermetically enclosed in a measuring gas chamber. The second detector detects light passing through an optical path constituted by a region for gas to be measured, and a gas region having the same gas as a gas to be measured, which is hermetically enclosed in a comparison gas chamber. In addition, an increase or decrease in irradiation light quantity is detected by the second detector, and an output of the first detector is calibrated.

Further, Patent Document 2 discloses a gas concentration calculating device for detecting a concentration of a sample gas in a cylinder. Here, a reflecting mirror is installed at a head of a piston reciprocating in the cylinder, and a light source and a detector are disposed at the head of the cylinder to be directed inward with respect to the cylinder. According to the above-mentioned configuration, light emitted from the light source and reflected by the reflecting mirror on the piston is received by the detector. According to the reciprocation of the piston, since an optical path length from the light source to the detector via the reflecting mirror is varied, energy received by the detector is varied. Thus, based on a variation in output value output from the detector, a concentration of the sample gas is calculated.

[Related Art Documents]

[Patent Document]

[Patent Document 1] Japanese Patent Laid-open Publication No. 2007-256242
[Patent Document 2] Japanese Patent Laid-open Publication No. H05-180760

### Summary of Invention

Technical Problem

However, in the gas concentration calculating device disclosed in Cited Document 1, it is necessary to separately arrange the comparison gas chamber in which the same kind of gas as the gas to be measured is hermetically enclosed. In addition, when a plurality of gases to be measured are provided as subjects to be detected, a plurality of comparison gas chambers are needed for each of the gases to be measured. Further, in the case of a certain gas, it may be difficult to fill the gas in the comparison gas chamber.

Furthermore, in the gas concentration calculating device disclosed in Cited Document 2, since the reciprocation of the piston is used to vary the optical path length, it is theoretically impossible to simultaneously detect light of different optical path lengths. In addition, due to an influence of vibration or the like caused by an operation of the piston, the piston moves in an optical path length direction and the optical path length is varied, and thus a measurement error may occur.

Further, in the gas concentration calculating device disclosed in Cited Document 1, light passing through the inert gas region and light passing through the comparison gas chamber are detected by the separate light receiving elements in the photo detector, respectively, and comparison of detection values is performed. For this reason, when there is an inherent variation between the two light receiving elements or an environmental change, influences applied to the two light receiving elements are different, and thus, it is impossible to accurately compare the detection values.

Accordingly, it is an object according to an aspect of the present invention to provide a gas concentration calculating device and a gas concentration measuring module capable of more accurately calculating concentrations of various kinds of gases.

In addition, it is an object according to another aspect of the present invention to provide a photo detector capable of reducing an inherent variation between separate light receiving elements, accurately comparing detection values of the light receiving elements even when a measurement environment is varied, and reducing crosstalk of light between the light receiving elements.

Solution to Problem

A gas concentration calculating device according to an aspect of the present invention including a gas concentration measuring module and a gas concentration calculating module and configured to calculate a concentration of a target gas, wherein the gas concentration measuring module includes a gas cell configured to form an introduction space into which the target gas is introduced; a light source disposed at one end of the gas cell; a signal light receiving means and a reference light receiving means disposed at the other end of the gas cell and configured to receive light emitted from the light source; and an inert gas chamber disposed on an optical path between the light source and the reference light receiving means in the introduction space and into which an inert gas, inert with respect to the light emitted from the light source, is hermetically enclosed, and wherein the gas concentration calculating module calculates the concentration of the target gas based on a ratio between an energy value of the light received by the signal light receiving means and an energy value of the light received by the reference light receiving means of the gas concentration measuring module.

In addition, a gas concentration measuring module of a gas concentration calculating device for calculating a concentration of a target gas according to one aspect of the present invention includes a gas cell configured to form an introduction space into which the target gas is introduced; a light source disposed at one end of the gas cell; a signal light receiving means and a reference light receiving means disposed at the other end of the gas cell and configured to receive light emitted from the light source; and an inert gas chamber disposed on an optical path between the light source and the reference light receiving means in the introduction space and in which an inert gas, inert with respect to the light emitted from the light source, is hermetically enclosed.

In the present invention, since the inert gas chamber is disposed on the optical path between the light source and the reference light receiving means in the introduction space, the light emitted from the light source passes through the target gas and the inert gas in the introduction space to enter the reference light receiving means. Further, the light emitted from the light source passes through the target gas in the introduction space to enter the signal light receiving means. For this reason, a distance that the light entering the reference light receiving means passes through the target gas is reduced by a space in which the inert gas is present, in comparison with a distance that the light entering the signal light receiving means passes through the target gas. Accordingly, the lights having different distances passing through the target gas, i.e., the lights having different absorption amounts of the target gas, can be simultaneously measured by the signal light receiving means and the reference light receiving means.

In addition, in the present invention, concentrations of various kinds of gases can be measured without using the comparison gas chamber in which the same kinds of gas as the gas to be measured are hermetically enclosed, similar to the gas concentration calculating device disclosed in Cited Document 1. Further, a plurality of gases can be simultaneously measured.

Furthermore, in the present invention, since there is no vibration or the like to vary an optical path length and no position difference or additional noise due to the vibration, a decrease in optical detection accuracy of the gas concentration measuring module can be prevented.

In addition, the inert gas may include at least any one of argon, xenon, and nitrogen.

In the present invention, using a phenomenon that no attenuation occurs when the light passes through the argon, xenon and nitrogen, the lights having different distances passing through the target gas can be obtained.

A gas concentration calculating device according to an aspect of the present invention including a gas concentration measuring module and a gas concentration calculating module and configured to calculate a concentration of a target gas, wherein the gas concentration measuring module includes: a gas cell configured to form an introduction space into which the target gas is introduced; a light source disposed at one end of the gas cell; and a signal light receiving means and a reference light receiving means disposed at the other end side of the gas cell, configured to receive light emitted from the light source, and disposed at positions having different distances that the light emitted from the light source passes through the introduction space, and wherein the gas concentration calculating module calculates the concentration of the target gas based on a ratio between an energy value of the light received by the signal light receiving means and an energy value of the light received by the reference light receiving means of the gas concentration measuring module.

In addition, a gas concentration measuring module of a gas concentration calculating device for calculating a concentration of a target gas according to an aspect of the present invention includes a gas cell configured to form an introduction space into which the target gas is introduced; a light source disposed at one end of the gas cell; and a signal light receiving means and a reference light receiving means disposed at the other end side of the gas cell, configured to receive the light emitted from the light source, and disposed at positions having different distances that the light emitted from the light source passes through the introduction space.

In the present invention, since the signal light receiving means and reference light receiving means are disposed at positions of different distances that the light emitted from the light source passes through the introduction space, the light having a short distance passing through the target gas enters one of the signal light receiving means and the reference light receiving means in comparison with the other. Accordingly, the lights having different distances passing through the target gas, i.e., the lights having different absorption amounts by the target gas, can be simultaneously measured by the signal light receiving means and the reference light receiving means.

In addition, in the present invention, the lights having different absorption amounts can be measured and concentrations of various kinds of gases can be measured without using the comparison gas chamber in which the same kinds of gas as the gas to be measured are hermetically enclosed, similar to the gas concentration calculating device disclosed in Cited Document 1. Further, a plurality of gases can be simultaneously measured.

Further, in the present invention, since there is no vibration or the like to vary an optical path length and no position difference or additional noise due to the vibration, a decrease in optical detection accuracy of the gas concentration measuring module can be prevented.

Furthermore, a band-pass filter disposed on an optical path between the light source and the light receiving means and through which only light having a predetermined wavelength passes may be further provided.

In the present invention, the lights respectively received by the signal light receiving means and the reference light receiving means can become the same wavelength by the band-pass filter, and a decrease in optical detection accuracy can be prevented as the wavelengths of the lights respectively received by the signal light receiving means and the reference light receiving means are different.

In addition, the light source may emit infrared rays.

In the present invention, using a phenomenon that the energy is attenuated when the infrared rays pass through the target gas, the concentration of the target gas can be calculated.

Further, the target gas may be carbon dioxide.

In the present invention, using a phenomenon that the energy is attenuated when the light passes through the target gas such as carbon dioxide, the concentration of the target gas can be calculated.

Furthermore, a storage means configured to previously store a database or an approximate equation representing a correlation between the concentration and the ratio of the target gas may be further provided, and the gas concentration calculating module may calculate the concentration corresponding to the ratio based on the database or the approximate equation.

In the present invention, based on the previously prepared database or approximate equation, the concentration of the target gas can be accurately calculated.

In addition, the gas concentration measuring module including a plurality of light receiving means corresponding to different target gases, and a plurality of gas concentration calculating modules corresponding to the plurality of light receiving means may be provided.

In the present invention, as the plurality of gas concentration measuring modules using different target gases are provided, the concentrations of the plurality of gases can be accurately calculated.

In addition, a photo detector according to one aspect of the present invention including a plurality of light receiving elements configured to respectively receive lights on different optical paths includes a shielding means for shielding the light received by one light receiving element and the light received by another light receiving element, wherein the plurality of light receiving elements are formed adjacent to each other on one light receiving element chip.

Further, a photo detector according to an aspect of the present invention is a photo detector of a gas concentration calculating device for detecting lights on different optical paths passing through a target gas to calculate a concentration of the target gas, and the photo detector includes a plurality of light receiving elements configured to receive the lights on the different optical paths; and a shielding means for shielding the light received by one light receiving element and the light received by another light receiving element, wherein the plurality of light receiving elements are formed adjacent to each other on one light receiving element chip.

In the present invention, as the shielding means is provided, the light entering one light receiving element is prevented from entering another light receiving element. Accordingly, crosstalk of the light between the respective light receiving elements can be reduced. For this reason, the lights on the different optical paths can be accurately detected.

In addition, as the light receiving elements formed adjacent to each other on one light receiving element chip are used, since the neighboring light receiving element have substantially the same characteristics, inherent variation between the individual light receiving elements can be reduced. For this reason, even when the measurement environment is varied, as a variation in detection value between the respective light receiving elements become the same variation characteristics, the variation in these detection values can be easily offset. Accordingly, comparison of the detection values of the respective light receiving elements can be accurately performed.

In addition, the light receiving element may be surrounded by a package substrate on which the light receiving element is placed, and a package cap having a package cap opening formed at a position opposite to the light receiving element and extending from the package substrate to cover the light receiving element, and the shielding means may be disposed between the package cap and the light receiving element, and may be constituted by an inner cap having an inner cap opening formed at a position opposite to the light receiving element and extending from the package substrate to cover the light receiving element, and an inner cap partition plate extending from a surface of the inner cap opposite to the light receiving element to a region between the plurality of light receiving elements.

In the present invention, as the inner cap and the inner cap partition plate are provided, the light entering one light receiving element is prevented from entering another light receiving element. In this way, as a simple configuration such as the inner cap partition plate and the inner cap is provided, crosstalk of the light can be reduced.

In addition, the light receiving element may be surrounded by a package substrate on which the light receiving element is placed, and a package cap having a package cap opening formed at a position opposite to the light receiving element and extending from the package substrate to cover the light receiving element, and the shielding means may be constituted by a partition plate extending from a surface of the package cap opposite to the light receiving element to a region between the plurality of light receiving elements.

In the present invention, as the partition plate extending to the region between the light receiving elements is installed at the package cap, the light entering one light receiving element is prevented from entering another light receiving element. In this way, as a simple configuration in which the partition plate is installed at the package cap is provided, crosstalk of the light can be reduced.

In addition, the light receiving element may be surrounded by a package substrate on which the light receiving element is disposed, and a package cap having a package cap opening formed at a position opposite to the light receiving element and extending from the package substrate to cover the light receiving element, and the shielding means may be disposed between the package cap and the light receiving element, and is constituted by a cylindrical cap placed on the light receiving element.

In the present invention, as the cylindrical cap is disposed on the light receiving element, the light entering one light receiving element is prevented from entering another light receiving element. In this way, as a simple configuration such as the cylindrical cap is provided, crosstalk of the light can be reduced.

In addition, a band-pass filter, through which only light having a predetermined wavelength passes, configured to cover the package cap opening may be further provided.

In the present invention, the lights received by the respective light receiving elements can become the same wavelength by the band-pass filter, and a decrease in optical detection accuracy can be prevented as wavelengths of the lights respectively received by the light receiving elements become different.

A gas concentration calculating device according to an aspect of the present invention including a gas concentration measuring module and a gas concentration calculating module to calculate a concentration of a target gas, wherein the gas concentration measuring module includes: a first gas cell configured to form a first introduction space into which the target gas is introduced; a second gas cell configured to form a second introduction space into which the target gas is introduced; a light source disposed at one ends of the first gas cell and the second gas cell; a reference light receiving means disposed at the other end of the first gas cell and configured to receive light emitted from the light source and passed through the first introduction space; a signal light receiving means disposed at the other end of the second gas cell and configured to receive light emitted from the light source and passed through the second introduction space; and a concentration change means for changing a concentration of the target gas in the first introduction space and a concentration of the target gas in the second introduction space into different concentrations, and wherein the gas concentration calculating module calculates the concentration of the target gas based on a ratio between an energy value of the light received by the signal light receiving means and an energy value of the light received by the reference light receiving means of the gas concentration measuring module.

In addition, a gas concentration measuring module according to another aspect of the present invention is a gas concentration measuring module of a gas concentration calculating device for calculating a concentration of a target gas, and the gas concentration measuring module includes a first gas cell configured to form a first introduction space into which the target gas is introduced; a second gas cell configured to form a second introduction space into which the target gas is introduced; a light source disposed at one ends of the first gas cell and the second gas cell; a reference light receiving means disposed at the other end of the first gas cell and configured to receive light emitted from the light source and passed through the first introduction space; a signal light receiving means disposed at the other end of the second gas cell and configured to receive light emitted from the light source and passed through the second introduction space; and a concentration change means for changing the concentration of the target gas in the first introduction space and the concentration of the target gas in the second introduction space into different concentrations.

In the present invention, the reference light receiving means receives the light passing through the first introduction space. The signal light receiving means receives the light passing through the second introduction space. In addition, the concentration of the target gas in the first introduction space and the concentration of the target gas in the second introduction space are changed into different concentrations by the concentration change means. For this reason, the lights passing through the introduction space containing the target gases of different concentrations, i.e., the lights having different absorption amounts by the target gases, can be simultaneously measured by the signal light receiving means and the reference light receiving means.

In addition, in the present invention, the gas concentration calculating device is configured to measure the lights having different absorption amounts, without using the comparison gas chamber or the like, in which gases representing different variation characteristics due to being in a saturated state although being of the same kind as the gas to be measured are hermetically contained, similar to the gas concentration calculating device disclosed in Cited Document 1. In particular, in the present invention, the same target gas is introduced into the first gas cell and the second gas cell to be changed into different concentrations, without preparing gases (gases in the comparison gas chamber) having different variation characteristics from the beginning as disclosed in Cited Document 1. For this reason, even when intensity, a temperature, or the like of the light source is varied, since the target gases in the first gas cell and the second gas cell are the same gas having different temperatures, variation characteristics of the measured values of the signal light receiving means and the reference light receiving means are equal to each other. In this way, since the variation characteristics of the measured values of the signal light receiving means and the reference light receiving means are equal to each other, based on these measured values, the variations in the measured values due to the intensity, temperature, or the like of the light source can be easily offset, and the gas concentration can be more accurately calculated.

In addition, in the present invention, since there is no vibration or the like to vary an optical path length and no position difference or additional noise due to the vibration, a decrease in optical detection accuracy of the gas concentration measuring module can be prevented.

In addition, the concentration change means may include a first heater installed at the first gas cell, and as the target gas in the first introduction space is increased in temperature by the first heater, the concentration of the target gas in the first introduction space and the concentration of the target gas in the second introduction space may be changed into different concentrations.

In the present invention, as the target gas in the first introduction space is increased in temperature by the first heater, the target gas in the first introduction space is decreased in concentration in comparison with the target gas in the second introduction space. In this way, using expansion of the target gas by application of heat, the concentration of the target gas in the first introduction space and the concentration of the target gas in the second introduction space can be easily changed into different concentrations.

In addition, the concentration change means may include a first heater installed at the first gas cell and a second heater installed at the second gas cell, and as the target gas in the first introduction space and the target gas in the second introduction space are heated to different temperatures, the concentration of the target gas in the first introduction space and the concentration of the target gas in the second introduction space may be changed into different concentrations.

In the present invention, as the target gas in the first introduction space and the target gas in the second introduction space are increased to different temperatures by the first heater and the second heater, the target gas in the first introduction space and the target gas in the second introduction space become different concentrations. In this way, using expansion of the target gas by application of heat, the concentration of the target gas in the first introduction space and the concentration of the target gas in the second introduction space can be easily changed into different concentrations.

In addition, the gas concentration measuring module may further include a thermal insulating member disposed between the first gas cell and the second gas cell.

In the present invention, as the thermal insulating member is provided, heat transfer between the first gas cell and the second gas cell is prevented, the target gas can be efficiently increased in temperature, and a temperature difference between the target gas in the first gas cell and the target gas in the second gas cell can be more securely maintained.

In addition, the concentration change means may further include an inert gas supply unit configured to introduce an inert gas, inert with respect to the light emitted from the light source, into the first introduction space, and as the inert gas is introduced into the first introduction space from the inert gas supply unit, the concentration of the target gas in the first introduction space and the concentration of the target gas in the second introduction space may be changed into different concentrations.

In the present invention, since the inert gas is introduced into the first introduction space, the target gas in the first introduction space is decreased in concentration in comparison with the target gas in the second introduction space. In this way, since the inert gas is introduced into the first introduction space, the concentration of the target gas in the first introduction space and the concentration of the target gas in the second introduction space can be changed into different concentrations. In addition, since the inert gas is inert with respect to the light emitted from the light source, even when the intensity, temperature, or the like of the light source are varied, there is no influence on variation characteristics of the measured value in the reference light receiving means. For this reason, even when the intensity, temperature, or the like of the light source are varied, because the target gases in the first gas cell and the second gas cell are the same gas having different concentrations, variation characteristics of the measured values by the signal light receiving means and the reference light receiving means are equal to each other. Accordingly, the variations in the measured values due to the intensity, temperature, or the like of the light source can be easily offset, and the gas concentration can be more accurately calculated.

In addition, the inert gas may include at least any one of argon, xenon, and nitrogen.

In the present invention, dilution can be performed without varying characteristics of the target gas using a phenomenon that no attenuation occurs when the light passes through argon, xenon and nitrogen.

Further, a band-pass filter disposed on an optical path between the light source and the light receiving means and through which only light having a predetermined wavelength passes may be further provided.

In the present invention, the lights respectively received by the signal light receiving means and the reference light receiving means can become the same wavelength by the band-pass filter, and a decrease in optical detection accuracy can be prevented as wavelengths of the lights respectively received by the signal light receiving means and the reference light receiving means are different.

In addition, the light source may emit infrared rays.

In the present invention, using a phenomenon that the energy is attenuated when the infrared rays pass through the target gas, the concentration of the target gas can be calculated.

Further, the target gas may be carbon dioxide.

In the present invention, using a phenomenon that the energy is attenuated when the light passes through the carbon dioxide, the concentration of the target gas can be calculated.

In addition, a storage means for previously storing a database or an approximate equation representing a correlation between the concentration and the ratio of the target gas may be further provided, and the gas concentration calculating module may calculate the concentration corresponding to the ratio based on the database or the approximate equation.

In the present invention, based on the previously prepared database or approximate equation, the concentration of the target gas can be accurately calculated.

Advantageous Effects of Invention

According to an aspect of the present invention, it is possible to simultaneously and more accurately calculate concentrations of various kinds of gases.

In addition, according to another aspect of the present invention, it is possible to reduce an inherent variation between separate light receiving elements, accurately comparing detection values by the light receiving elements even when a measurement environment is varied, and reducing crosstalk of light between the light receiving elements.

Further, according to another aspect of the present invention, it is possible to more accurately calculate a concentration of a gas even when a measurement environment is varied.

**Brief Description of Drawings**

FIG. 1 is a cross-sectional view showing a gas concentration calculating device according to a first embodiment;
FIG. 2 is a view representing a database showing a correlation of concentrations and ratios;
FIG. 3 is a view representing a graph showing a correlation of concentrations and ratios;
FIG. 4 is a flowchart showing a flow of gas concentration calculation processing;
FIG. 5 is a cross-sectional view showing a variant of the gas concentration calculating device;
FIG. 6 is a cross-sectional view showing a variant of the gas concentration calculating device according to the first embodiment;
FIG. 7 is a cross-sectional view showing a variant of the gas concentration calculating device according to the first embodiment;
FIG. 8 is a cross-sectional view showing a gas concentration calculating device according to a second embodiment;
FIG. 9 is a cross-sectional view specifically showing a light receiving unit according to the second embodiment;
FIG. 10 is a cross-sectional view specifically showing a light receiving unit according to a third embodiment;
FIG. 11 is a cross-sectional view specifically showing a light receiving unit according to a fourth embodiment;
FIG. 12 is a schematic cross-sectional view showing a gas concentration calculating device according to a fifth embodiment;
FIG. 13 is a view representing a database showing a correlation of concentrations and ratios;
FIG. 14 is a view representing a graph showing a correlation of concentrations and ratios;
FIG. 15 is a flowchart showing a flow of gas concentration calculation processing;
FIG. 16 is a schematic cross-sectional view showing a gas concentration calculating device according to a sixth embodiment;
FIG. 17 is a schematic cross-sectional view showing a gas concentration calculating device according to a seventh embodiment;
FIG. 18 is a view representing a database showing a correlation of concentrations and ratios; and
FIG. 19 is a view representing a graph showing a correlation of concentrations and ratios.

**Description of Embodiments**

Hereinafter, exemplary embodiments of a gas concentration calculating device, a gas concentration measuring module and a photo detector according to the present invention will be described in detail with reference to the accompanying drawings. In addition, like elements in the description of the drawings are designated by like reference numerals, and description thereof will not be repeated.

[First Embodiment]

(Overall Configuration of Gas Concentration Calculating Device 1 X)

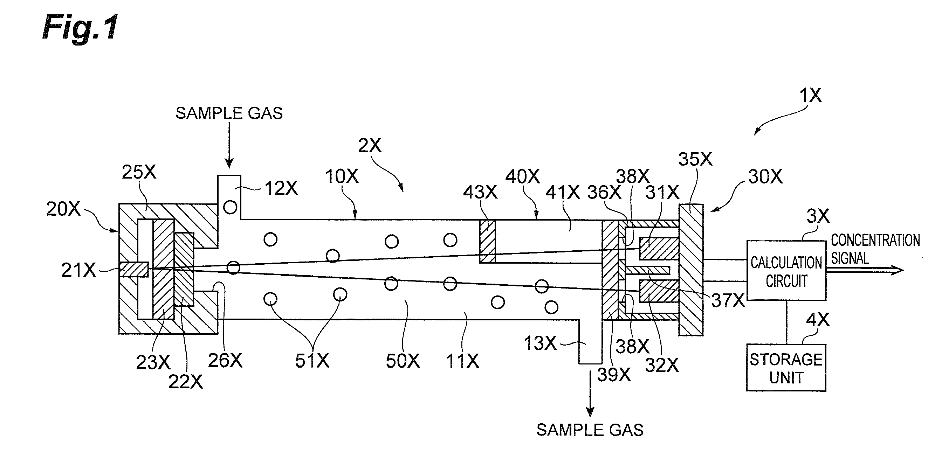

First, an overall configuration of the gas concentration calculating device 1X according to a first embodiment will be described. FIG. 1 is a cross-sectional view showing the gas concentration calculating device. The gas concentration calculating device 1X includes a gas concentration measuring module 2X configured to receive infrared light from an infrared light source 21X (corresponding to "a light source" of the claims) and measure energy thereof, a calculation circuit 3X (corresponding to "a gas concentration calculating module" of the claims) configured to calculate a gas concentration based on a measurement result by the gas concentration measuring module 2X, and a storage unit 4X (corresponding to "a storage means" of the claims) configured to store information when the calculation circuit 3X calculates the gas concentration, calculating a concentration of a target gas. The gas concentration calculated by the calculation circuit 3X is output to a control device (not shown), and so on, to be used to control, for example, an air-conditioning system, and so on. In addition, in the first embodiment, an example in which carbon dioxide in a sample gas introduced into the gas concentration measuring module 2X is provided as a target gas for concentration calculation will be described.

The gas concentration measuring module 2X includes a gas cell 10X having an introduction space 11X into which a sample gas 50X is introduced, a light source unit 20X disposed at one end of the gas cell 10X, and a light receiving unit 30X (corresponding to "a signal light receiving means and a reference light receiving means" of the claims) disposed at the other end of the gas cell 10X and receiving light emitted from the light source unit 20X.

The gas cell 10X includes a gas introduction section 12X formed at one end side of the gas cell 10X to introduce the sample gas 50X into the introduction space 11X, and a gas discharge section 13X formed at the other end side of the gas cell 10X to discharge the sample gas 50X in the introduction space 11X to the outside. In addition, a plurality of holes may be formed, other than an entrance as shown in FIG. 1.

The light source unit 20X includes a housing 25X coupled to the gas cell 10X, the infrared light source 21X disposed in the housing 25X, an opening 26X formed in the housing 25X at an opposite area of the infrared light source 21X and guiding the infrared light emitted from the infrared light source 21X to the outside of the housing 25X, and a band-pass filter 22X and a window member 23X covering the opening 26X. The infrared light emitted from the infrared light source 21X is introduced into the gas cell 10X via the window member 23X and the band-pass filter 22X. Here, the infrared light source 21X uses emission of light having a wavelength range of 4.2 $\mu$m to 4.3 $\mu$m. In addition, the band-pass filter 22X allows passage of only light having a wavelength range of 4.2 $\mu$m to 4.3 $\mu$m. Further, the window member 23X is formed of a material having a high transmittance with respect to infrared rays. Furthermore, window members 39X and 43X to be described later also have the same configuration as the window member 23X.

The light receiving unit 30X includes a reference light receiving element 31X (corresponding to "a reference light receiving means" of the claims) and a signal light receiving element 32X (corresponding to "a signal light receiving means" of the claims), which are disposed on a substrate 35X, a cap 36X covering the reference light receiving element 31X and the signal light receiving element 32X, a partition wall 37X extending from the cap 36X within a region between the reference light receiving element 31X and the signal light receiving element 32X, openings 38X formed in the cap 36X at opposite areas of the reference light receiving element 31X and the signal light receiving element 32X, and the window member 39X covering the openings 38X. The reference light receiving element 31X and the signal light receiving element 32X output energy values of the received infrared lights to the calculation circuit 3X.

In addition, an inert gas chamber 40X is disposed on an optical path between the infrared light source 21X and the reference light receiving element 31X in the introduction space 11X of the gas cell 10X. An inert gas 41X, which is inert with respect to the infrared light emitted from the infrared light source 21X, is hermetically enclosed in the inert gas chamber 40X. The inert gas chamber 40X is disposed at an end portion of the light receiving unit 30X side in the introduction space 11X. Further, the inert gas chamber 40X has the window member 43X disposed at an end portion thereof, into which the infrared light from the infrared light source 21X enters. While not shown, when the band-pass filter 22X is not installed at a position shown in FIG. 1, the band-pass filter may be installed at a position of the window member 39X of FIG. 1. That is, a location at which the band-pass filter is disposed is not particularly limited as long as the band-pass filter is disposed on an optical path between the light source unit 20X and the light receiving unit 30X. In addition, as the inert gas 41X, an (inert) gas that is not absorbed by infrared light (a wavelength of 4.2 $\mu$m to 4.3 $\mu$m) emitted from the infrared light source 21X, for example, an inert gas such as argon or xenon, or nitrogen, is used. In particular, nitrogen or argon may be used, because nitrogen and argon are chemically stable and have a merit in cost.

According to the above-mentioned configuration, among the infrared light emitted from the infrared light source 21X, the infrared light entering the reference light receiving element 31X passes through the sample gas 50X in the introduction space 11X and the inert gas 41X in the inert gas chamber 40X. The infrared light entering the signal light receiving element 32X passes through the sample gas 50X in the introduction space 11X. Accordingly, the infrared light received by the reference light receiving element 31X has a distance passing through the sample gas 50X smaller in proportion to a space in which the inert gas 41X is present than that of the infrared light received by the signal light receiving element 32X. That is, the infrared lights having different absorption amounts due to carbon dioxide of the sample gas 50X can be simultaneously received by the reference light receiving element 31X and the signal light receiving element 32X. Here, as shown in FIG. 1, the infrared light is absorbed by carbon dioxide molecules 51X in the sample gas 50X.

(Stored Information of Storage Unit 4X)

Next, information stored in the storage unit 4X will be described. In the storage unit 4X, an approximate equation showing a correlation between a concentration of the carbon dioxide and a ratio of energy values of infrared lights received by the reference light receiving element 31X and the signal light receiving element 32X is previously stored.

In general, provided that an infrared ray energy value from the light source is I0, an infrared ray energy value arriving at the light receiving means is I, an optical path length from the light source to the light receiving means is 1, a concentration of a target gas is C, and an absorption coefficient is $\mu$, according to Lambert-Beer's Law, a relation shown by the following Equation (1) is satisfied.

$$I = I0\exp(-\mu \cdot C \cdot 1)\ldots(1)$$

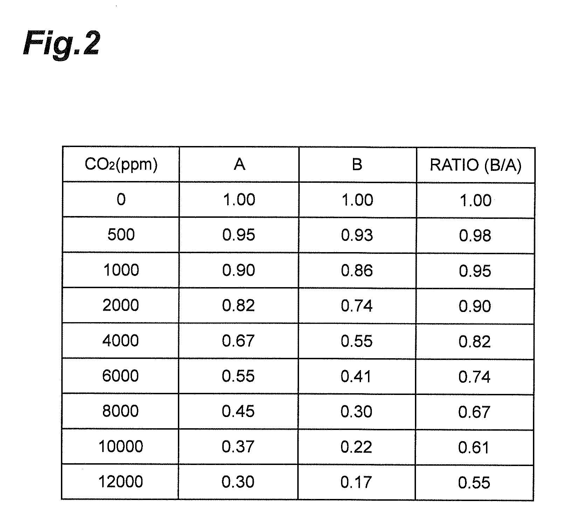

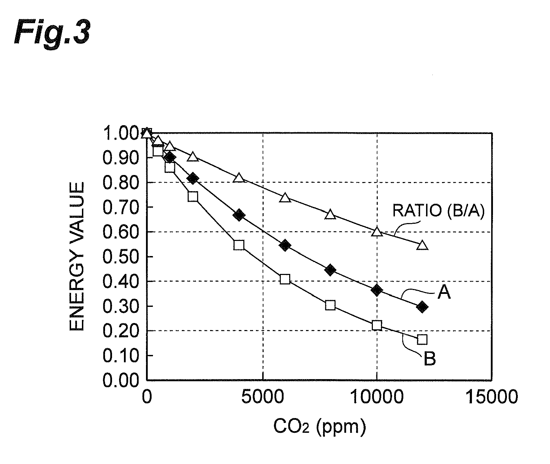

An energy value A received by the reference light receiving element 31X and an energy value B received by the signal light receiving element 32X are previously calculated at each concentration of carbon dioxide based on the relation using the Lambert-Beer's Law. That is, as I is obtained by substituting already known 10, $\mu$, C and 1 into Equation (1), the energy values A and B are calculated. In addition, a ratio (B/A) between the energy value B and the energy value A is calculated. These calculated values correspond to the concentrations of carbon dioxide to make a database showing a correlation between the concentrations of carbon dioxide and the ratios of the energy values as shown in FIG. 2. Further, according to the database shown in FIG. 2, a graph showing a correlation between the concentrations of carbon dioxide and the ratios of the energy values shown in FIG. 3 is obtained, and an approximate equation (for example, a concentration = f(ratio)) of the ratios (B/A) of the energy values and the concentrations of carbon dioxide is calculated. The calculated approximate equation is stored in the storage unit 4X.

In addition, in the first embodiment, a distance that the infrared light entering the reference light receiving element 31X from the infrared light source 21X passes through the sample gas 50X is set as, for example, 2L, and a distance that the infrared light entering the signal light receiving element 32X from the infrared light source 21X passes through the sample gas 50X is set as, for example, 3L, to differentiate the optical path lengths. In addition, in the database of FIG. 2, for the convenience of drafting the database, standardization is set such that the energy values A and B become 1 when the concentration of the carbon dioxide is zero ppm.

As the ratio between the energy value A received by the reference light receiving element 31X and the energy value B received by the signal light receiving element 32X corresponds to the concentration of carbon dioxide, by using the database of FIG. 2 or the approximate equation, the concentration of the carbon dioxide can be calculated based on a ratio of energy values of lights actually received by the reference light receiving element 31X and the signal light receiving element 32X.

(Concentration Calculation Processing of Carbon Dioxide)

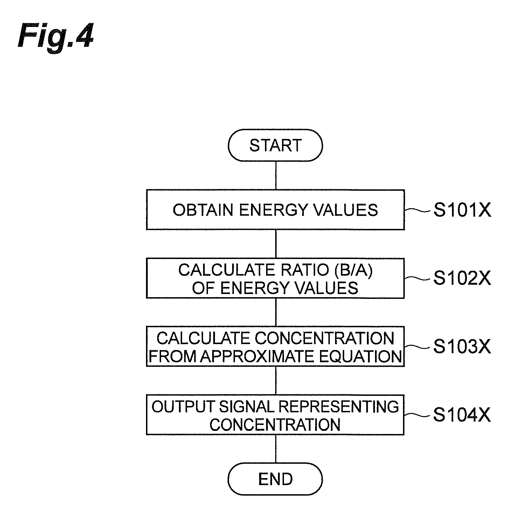

Next, according to the energy values of the lights received by the reference light receiving element 31X and the signal light receiving element 32X, a flow of the processing in which the calculation circuit 3X calculates the concentration of carbon dioxide will be described. In addition, the calculation circuit 3X is a circuit including a CPU, and so on. FIG. 4 is a flowchart showing a flow of the carbon dioxide concentration calculation processing.

In step S101X, the calculation circuit 3X obtains the energy value A of the light received by the reference light receiving element 31X and the energy value B of the light received by the signal light receiving element 32X.

Next, in step S102X, the calculation circuit 3X calculates a ratio (B/A) of the obtained energy values B and A. In step S103X, the calculation circuit 3X calculates a concentration of carbon dioxide from the ratio (B/A) calculated in step S102X using the approximate equation stored in the storage unit 4X. As the concentration is calculated using the approximate equation, the calculation processing can be easily performed.

In step S104X, the calculation circuit 3X outputs a signal showing the calculated concentration of the carbon dioxide to a control device (not shown). The signal showing the concentration of the carbon dioxide is used for, for example, control of air-conditioning in the control device.

(Operations and Effects of First Embodiment)

In the first embodiment, in the introduction space 11X, since the inert gas 41X is disposed on the optical path between the infrared light source 21X and the reference light receiving element 31X, the infrared light emitted from the infrared light source 21X passes through the sample gas 50X in the introduction space 11X and the inert gas 41X to enter the reference light receiving element 31X. In addition, the infrared light emitted from the infrared light source 21X passes through the sample gas 50X in the introduction space 11X to enter the signal light receiving element 32X.

For this reason, a distance that the infrared light entering the reference light receiving element 31X passes through the sample gas 50X is reduced in proportion to a space in which the inert gas 41X is present, in comparison with a distance that the infrared light entering the signal light receiving element 32X passes through the sample gas 50X. Accordingly, the infrared lights having different distances passing through the sample gas 50X, i.e., the infrared lights having different absorption amounts by the carbon dioxide in the sample gas 50X can be simultaneously measured by the reference light receiving element 31X and the signal light receiving element 32X.

In addition, the gas concentration calculating device 1X is configured to measure the lights having different absorption amounts, without using a comparison gas chamber in which the same gas as the gas to be measured is hermetically enclosed, similar to the gas concentration calculating device disclosed in Cited Document 1, and concentrations of various kinds of gases can be measured. In addition, various kinds of gases can be simultaneously measured.

Further, since there is no vibration or the like to vary an optical path length and no position difference or additional noise due to the vibration, a decrease in optical detection accuracy of the gas concentration measuring module 2X can be prevented.

Furthermore, as argon, xenon, and nitrogen are used as the inert gas 41X hermetically enclosed in the inert gas chamber 40X, the infrared lights having different distances passing through the sample gas 50X can be obtained using a phenomenon that there is no attenuation when the infrared lights pass through these gases.

In addition, the band-pass filter 22X is configured such that the lights respectively received by the reference light receiving element 31X and the signal light receiving element 32X can have the same wavelength, and the lights respectively received by the reference light receiving element 31X and the signal light receiving element 32X can have different wavelengths to prevent a decrease in optical detection accuracy.

Further, as the infrared light source 21X emits infrared rays, using a phenomenon that energy is attenuated due to carbon dioxide when the infrared rays pass through the sample gas 50X, a concentration of the carbon dioxide in the sample gas 50X can be calculated.

Furthermore, using a phenomenon that energy is attenuated when the infrared light passes through the carbon dioxide in the sample gas 50X, a concentration of the carbon dioxide in the sample gas 50X can be calculated.

In advance, as the approximate equation is stored in the storage unit 4X, a concentration of a target gas can be accurately calculated based on the approximate equation.

(Variant)

One aspect of the present invention is not limited to the above-mentioned first embodiment.

For example, in step S103X of FIG. 4, while the calculation circuit 3X calculates the concentration of the carbon dioxide using the approximate equation, the concentration of the carbon dioxide may be calculated without using the approximate equation. In this case, in advance, the database shown in FIG. 2 is stored in the storage unit 4X as a table. The calculation circuit 3X compares the obtained energy values A and B with the table stored in the storage unit 4X, and directly calculates the concentration from the table. In this case, the concentration can be calculated using the table, with no need to calculate the approximate equation between the ratio (B/A) of the energy and the concentration of the carbon dioxide from the database shown in FIG. 2.

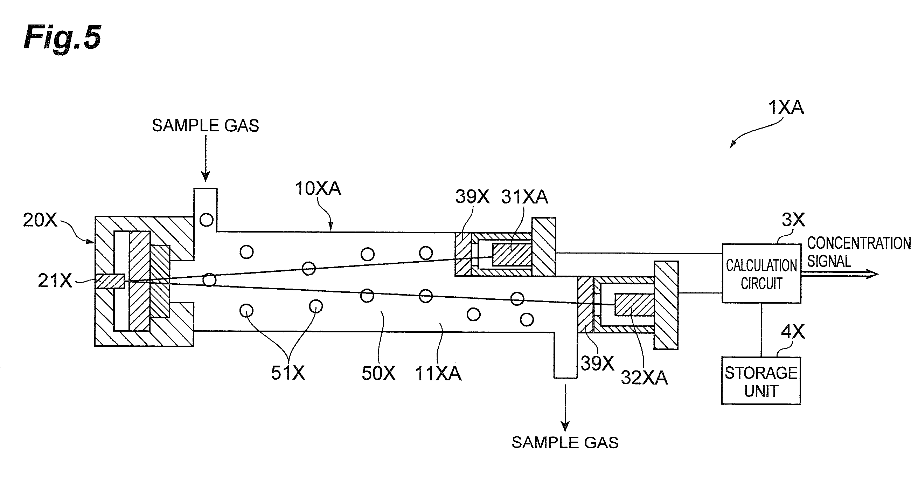

In addition, an optical path length of the light passing through the sample gas 50X can be varied without using the inert gas chamber 40X. For example, like a gas concentration calculating device 1XA shown in FIG. 5, a gas cell 10XA may have a step shape, and a reference light receiving element 31XA may be disposed nearer to the infrared light source 21X side than a signal light receiving element 32XA.

As described above, since the reference light receiving element 31XA and the signal light receiving element 32XA are disposed at positions of different distances that the infrared lights emitted from the infrared light source 21X pass through an introduction space 11XA, the infrared light having a shorter distance passing through the sample gas 50X in comparison with the signal light receiving element 32XA enters the reference light receiving element 31XA. Accordingly, the lights having different distances passing through the sample gas 50X, i.e., the infrared lights having different absorption amounts by the carbon dioxide in the sample gas 50X, can be simultaneously measured by the reference light receiving element 31XA and the signal light receiving element 32XA.

In addition, in the first embodiment, while the case in which the concentration of the carbon dioxide is calculated by the gas concentration calculating device 1X or 1XA has been described, it is needless to say that concentrations of the other gases can be calculated. In addition, as a kind of a light source or a band-pass filter is appropriately added to correspond to a gas, a concentration of which is to be measured, concentrations of a plurality of gases can be simultaneously calculated. Further, while the distance that the infrared light entering the reference light receiving element 31X from the infrared light source 21X passes through the sample gas 50X is set as 2L and the distance that the infrared light entering the signal light receiving element 32X from the infrared light source 21X passes through the sample gas 50X is set as 3L, the distance is not limited thereto but may be appropriately optimized from a measurement range or accuracy of a gas, a concentration of which is to be measured.

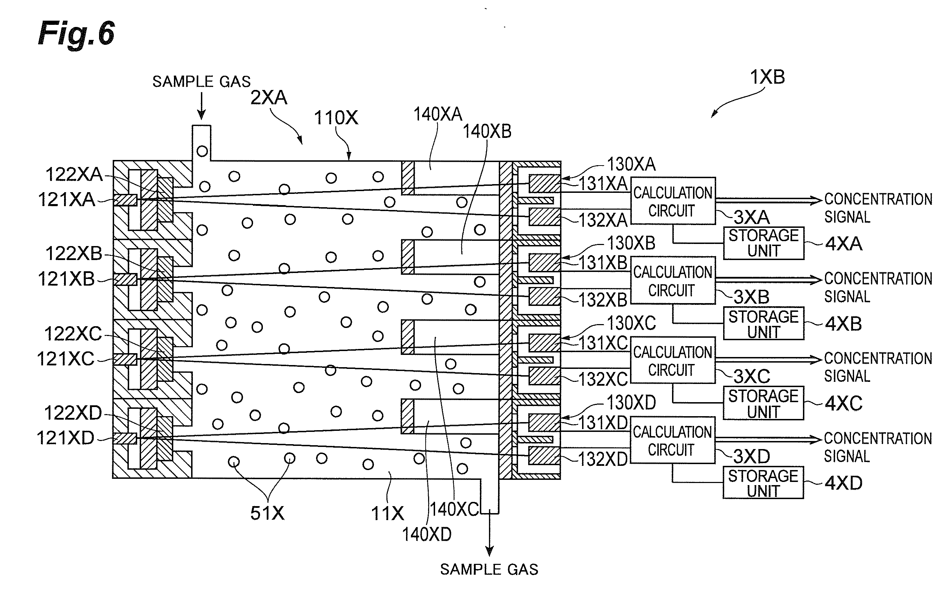

Here, FIG. 6 shows a variant for measuring gas concentrations of sample gases in which a plurality of kinds of gases are mixed. In calculating concentrations of different kinds of gases as described above, light sources configured to emit lights having different wavelengths respectively absorbed by the plurality of gases to be measured into gas cells, respectively, and a detection unit having a reference light receiving element and a signal light receiving element such that two optical paths having different optical path lengths are configured in a region in which lights from the respective light sources pass through the sample gas are set as one unit, and thus there is a need to measure gas concentrations in the respective units. Here, the gas concentration measuring module of the application can be realized by providing a plurality of detection units, each having one set constituted by an inert gas chamber, a reference light receiving element and a signal light receiving element, and connecting the detection units to the gas concentration calculating modules, respectively. FIG. 6 illustrates a gas concentration calculating device 1XB configured to measure gas concentrations of a sample gas in which four kinds of gases are mixed as an example.

As shown in FIG. 6, the gas concentration calculating device 1XB includes a gas concentration measuring module 2XA provided with light receiving units 130XA to 130XD having different target gases, and gas concentration calculating modules (the calculation circuits 3XA to 3XD and the storage units 4XA to 4XD) corresponding to the light receiving units 130XA to 130XD. Light sources 121XA to 121XD configured to emit lights having different wavelengths are disposed at one end side of a gas cell 110X. The lights emitted from the respective light sources 121XA to 121XD are received by the light receiving units 130XA to 130XD, respectively. In addition, when a wavelength range of the emitted light is wide and includes a wavelength range that can be used to absorb each target gas, one light source can be used.

The light receiving units 130XA to 130XD include reference light receiving elements 131XA to 131XD, and signal light receiving elements 132XA to 132XD, respectively. Inert gas chambers 140XA to 140XD in which inert gases, which are inert with respect to the lights emitted from the light sources 121XA to 121XD, are hermetically sealed are disposed on the optical paths between the light sources 121XA to 121XD and the reference light receiving elements 131XA to 131XD. Here, the inert gas chambers 140XA to 140XD, the reference light receiving elements 131XA to 131XD and the signal light receiving elements 132XA to 132XD are set as one unit to configure a detection unit. In addition, band-pass filters 122XA to 122XD configured to allow the light having a wavelength absorbed by a gas, which is a measuring target of each detection unit, to pass therethrough, but to block the light having the other wavelength, are disposed in front of the light sources 121XA to 121XD, respectively. In addition, a method of calculating a gas concentration calculated by each detection unit uses the same algorithm as described above.

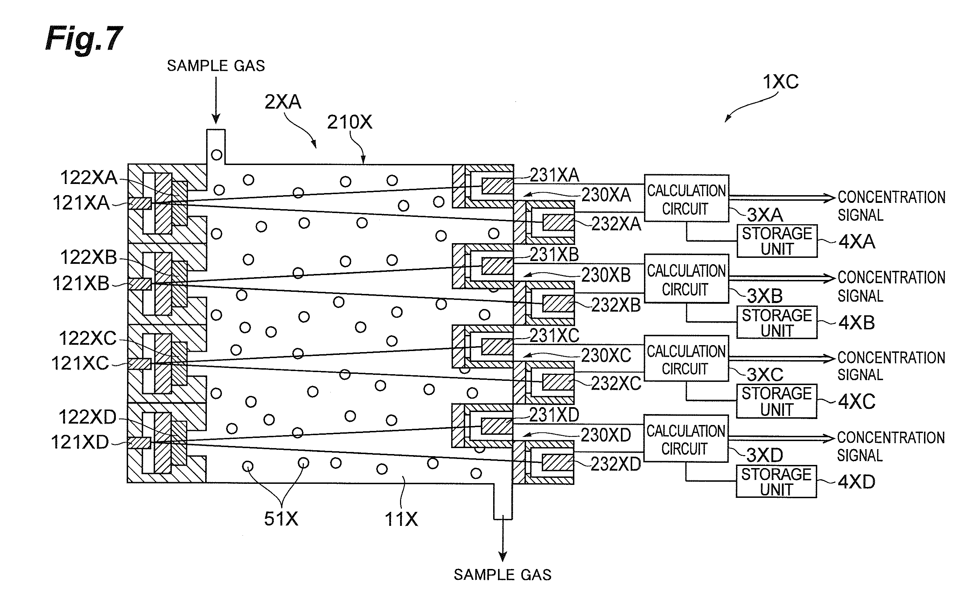

In addition, FIG. 7 illustrates a gas concentration calculating device 1XC configured to measure gas concentrations of a sample gas having four kinds of mixed gases, in which a distance from the light source to the reference light receiving element is different from a distance from light source to the signal light receiving element without using the inert gas chamber. That is, a gas cell 210X has a step shape, and in a light receiving unit 230XA configured to receive light emitted from the light source 121XA, a reference light receiving element 231XA is disposed at the light source 121XA side rather than a signal light receiving element 232XA. Similarly, even in the light receiving units 230XB to 230XD configured to receive the lights emitted from the light sources 121XB to 121XD, reference light receiving elements 231XB to 231XD are disposed at the light sources 121XB to 121XD side rather than signal light receiving elements 232XB to 232XD.

Further, the concentrations of the gases calculated by the gas concentration calculating devices 1X, 1XA, 1XB and 1XC can be applied to various instruments configured to calculate the concentrations of the gases, in addition to control of the air-conditioning.

In the following second to fourth embodiments, the case in which a photo detector according to one aspect of the present invention is applied to a photo detector used in the gas concentration calculating device configured to detect the lights on different optical paths passing through the sample gas and to calculate the concentration of the target gas in the sample gas will be described.

[Second Embodiment]

(Overall Configuration of Gas Concentration Calculating Device 1Y)

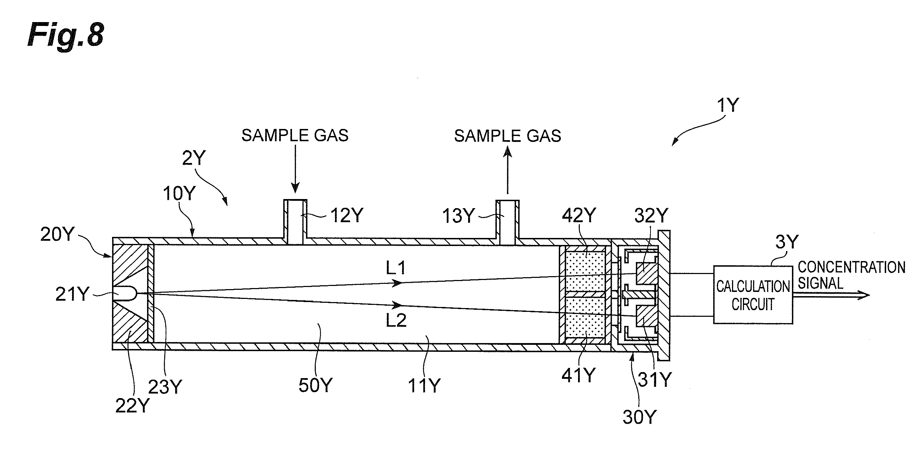

An overall configuration of the gas concentration calculating device 1Y according to a second embodiment will be described. FIG. 8 is a cross-sectional view showing the gas concentration calculating device. The gas concentration calculating device 1Y includes a light receiving module 2Y configured to receive the infrared light emitted from a infrared light source 21Y and measure its energy, and a calculation circuit 3Y configured to calculate a gas concentration based on the measurement result by the light receiving module 2Y, calculating the concentration of the target gas. The gas concentration calculated by the calculation circuit 3Y is output to a control device (not shown), and so on, and used to control, for example, an air-conditioning system. In addition, in the second embodiment, the case in which the carbon dioxide in the sample gas introduced into the light receiving module 2Y is provided as a target gas for calculating a concentration will be described.

The light receiving module 2Y includes a gas cell 10Y forming an introduction space 11Y into which a sample gas 50Y is introduced, a light source unit 20Y disposed at one end in the gas cell 10Y, a comparison gas chamber 41Y and a measuring gas chamber 42Y disposed at the other end in the gas cell 10Y, and a light receiving unit 30Y (corresponding to "a photo detector" of the claims) connected to the other end of the gas cell 10Y and configured to receive light emitted from the infrared light source 21Y of the light source unit 20Y.

The gas cell 10Y has a gas introduction section 12Y configured to introduce the sample gas 50Y into the introduction space 11Y, and a gas discharge section 13Y configured to discharge the sample gas 50Y in the introduction space 11Y to the outside.

The light source unit 20Y includes the infrared light source 21 Y configured to emit an infrared light, a reflecting member 22Y configured to reflect the infrared light emitted from the infrared light source 21 Y into the introduction space 11Y, and a window member 23Y formed of a material having a high transmittance with respect to the infrared rays.

The comparison gas chamber 41Y hermetically contains the same kind of gas as the target gas. In addition, the measuring gas chamber 42Y hermetically contains a gas inert with respect to the infrared light.

The light receiving unit 30Y includes a reference light receiving element 31 Y (corresponding to "a light receiving element" of the claims), and a signal light receiving element 32Y (corresponding to "a light receiving element" of the claims). The signal light receiving element 32Y receives the infrared light emitted from the infrared light source 21Y and entering an optical path L1 to pass through the measuring gas chamber 42Y. In addition, the reference light receiving element 31 Y receives the infrared light emitted from the infrared light source 21Y and entering an optical path L2 to pass through the comparison gas chamber 41Y. The light receiving unit 30Y outputs the energy values of the infrared lights received by the reference light receiving element 31Y and the signal light receiving element 32Y to the calculation circuit 3Y.

According to the above-mentioned configuration, the reference light receiving element 31Y and the signal light receiving element 32Y receive the infrared lights having different energy values as the gas chambers (the comparison gas chamber 41Y and the measuring gas chamber 42Y) through which the lights pass are different. The calculation circuit 3Y calculates an increase or decrease in emission light quantity based on the energy value received by the reference light receiving element 31Y, and corrects a detection value detected by the signal light receiving element 32Y to calculate the concentration of the carbon dioxide in the sample gas 50Y. In addition, in the gas concentration calculating device 1 Y, the components other than the light receiving unit 30Y are the same as in the above-mentioned Patent Document 1, and thus, detailed description thereof will be omitted. In addition, even in a sequence of calculating the gas concentration based on the two energy values, for example, as disclosed in Patent Document 1, a gas correlation method well known in the art can be used to calculate the gas concentration, and thus, detailed description thereof will be omitted.

(Specific Structure of Light Receiving Unit 30Y)

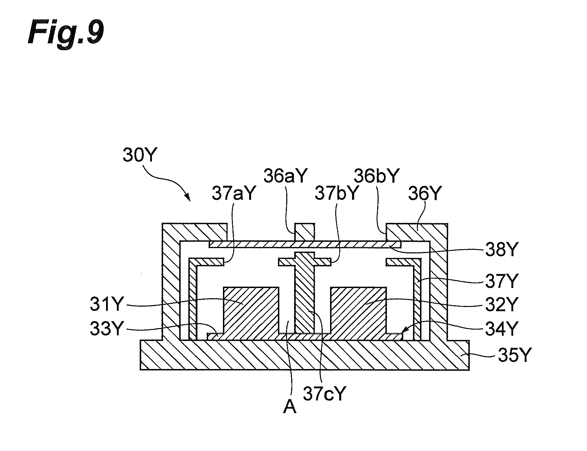

Next, a specific structure of the light receiving unit 30Y will be described. FIG. 9 shows the specific structure of the light receiving unit 30Y. The light receiving unit 30Y includes a package substrate 35Y on which a light receiving element chip 34Y having the reference light receiving element 31Y and the signal light receiving element 32Y formed thereon is placed, and a package cap 36Y extending from the package substrate 35Y to cover the reference light receiving element 31Y and the signal light receiving element 32Y. In addition, the package cap 36Y includes a package cap opening 36aY formed at a position opposite to the reference light receiving element 31 Y, and a package cap opening 36bY formed at a position opposite to the signal light receiving element 32Y. Further, the light receiving unit 30Y further includes a band-pass filter 38Y configured to cover the package cap openings 36aY and 36bY.

The band-pass filter 38Y allows only light having a predetermined wavelength to pass therethrough. In addition, the band-pass filter 38Y may be configured to be fixed to the package cap 36Y, or may be fixed to be sandwiched between the package cap 36Y and an inner cap 37Y (described later in detail).

Further, the light receiving unit 30Y further includes the inner cap 37Y disposed in the package cap 36Y and extending from the package substrate 35Y to cover the reference light receiving element 31Y and the signal light receiving element 32Y. The inner cap 37Y has an inner cap opening 37aY formed at a position opposite to the reference light receiving element 31Y, and an inner cap opening 37bY formed at a position opposite to the signal light receiving element 32Y. Furthermore, the inner cap 37Y has an inner cap partition plate 37cY extending from a surface thereof opposite to the reference light receiving element 31Y and the signal light receiving element 32Y to a region A between the reference light receiving element 31 Y and the signal light receiving element 32Y. In addition, the inner cap 37Y and the inner cap partition plate 37cY correspond to "a shielding means" of the claims.

The reference light receiving element 31Y and the signal light receiving element 32Y use neighboring light receiving elements among the plurality of light receiving elements formed on one light receiving element chip in a manufacturing process of the light receiving element. In addition, the reference light receiving element 31Y and the signal light receiving element 32Y are used in a state formed on a chip substrate 33Y, without being separated from each other in the manufacturing process. Further, the region A between the reference light receiving element 31Y and the signal light receiving element 32Y may be formed by grooving.

In addition, when the region A is formed of a material of the reference light receiving element 31 Y and the signal light receiving element 32Y configured to receive the infrared light by grooving, for example, a quantum type element such as PbSe, InSb, InAsSb or MCT, or a thermal element such as a thermopile, a thermistor or a pyroelectric element may be used. Further, when the thermal element is used, a cooler for cooling the light receiving element is not needed. Furthermore, when the quantum type element is used, a cooler for cooling the light receiving element may be appropriately provided.

In addition, the inner cap partition plate 37cY extends from a surface of the inner cap 37Y opposite to the reference light receiving element 31Y and the signal light receiving element 32Y to the chip substrate 33Y. Accordingly, a region surrounded by the inner cap 37Y and the package substrate 35Y is divided by the inner cap partition plate 37cY into a region of a side where the reference light receiving element 31Y is disposed and a region of a side where the signal light receiving element 32Y is disposed.

Further, the package cap 36Y, the inner cap 37Y and the inner cap partition plate 37cY are formed of a material for shielding the infrared rays.

(Operations and Effects of Second Embodiment)

As the second embodiment has the above-mentioned configuration, in the inside of the inner cap 37Y, the region of the reference light receiving element 31Y side and the region of the signal light receiving element 32Y side may be divided by the inner cap partition plate 37cY. Accordingly, the infrared light entering the signal light receiving element 32Y from the infrared light source 21Y through the optical path L1 does not enter the reference light receiving element 31Y after penetration into the inside of the inner cap 37Y. In addition, the infrared light reflected by a surface of the signal light receiving element 32Y does not enter the reference light receiving element 31Y either. Similarly, the infrared light which is to enter the reference light receiving element 31Y from the infrared light source 21 Y through the optical path L2 and the infrared light reflected by the surface of the reference light receiving element 31 Y do not enter the signal light receiving element 32Y.

For this reason, crosstalk of the light between the reference light receiving element 31Y and the signal light receiving element 32Y can be reduced, and the lights on the different optical paths can be accurately detected by the light receiving unit 30Y.

In addition, as the reference light receiving element 31Y and the signal light receiving element 32Y formed adjacent to each other on the light receiving element chip 34Y are used, since the neighboring light receiving elements have substantially the same characteristics, inherent variation between the reference light receiving element 31Y and the signal light receiving element 32Y can be reduced. For this reason, even when the measurement environment is varied, variations in the detection values between the reference light receiving element 31 Y and the signal light receiving element 32Y become the same variation characteristics, and variations in these detection values can be easily offset. Accordingly, comparison of the detection values by the reference light receiving element 31 Y and the signal light receiving element 32Y can be accurately performed.

Further, crosstalk of the light between the reference light receiving element 31Y and the signal light receiving element 32Y is reduced by the inner cap partition plate 37cY and the inner cap 37Y. In this way, as a simple configuration of the inner cap partition plate 37cY and the inner cap 37Y is provided, the crosstalk of the light can be reduced.

In addition, while not shown, a step is formed at the package cap openings 36aY and 36bY of the package cap 36Y, and the gas cell l0Y and the light receiving unit 30Y can be connected using the step. In this case, for example, a light guide tube configured to introduce light from the gas cell 10Y into the light receiving unit 30Y can be inserted into the step portion, or an optical fiber can be inserted thereinto. Accordingly, the infrared light can be more securely introduced from the gas cell 10Y into the light receiving unit 30Y.

[Third Embodiment]

A third embodiment is distinguished from the second embodiment in that the light receiving unit 30Y of the gas concentration calculating device 1Y is replaced with a light receiving unit 30YA (corresponding to "a photo detector" of the claims) having a different configuration, and thus description of the components other than the light receiving unit 30YA will not be repeated. In addition, in the light receiving unit 30YA of the third embodiment, the same elements as the light receiving unit 30Y in the second embodiment are designated by the same reference numerals, and description thereof will not be repeated.

(Specific Structure of Light Receiving Unit 30YA)

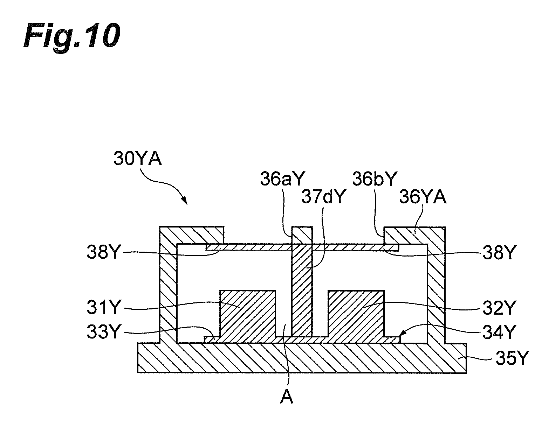

A specific structure of the light receiving unit 30YA will be described. FIG. 10 shows the specific structure of the light receiving unit 30YA. The light receiving unit 30YA includes a package substrate 35Y on which a light receiving element chip 34Y having a reference light receiving element 31Y (corresponding to "a light receiving element" of the claims) and a signal light receiving element 32Y (corresponding to "a light receiving element" of the claims) is placed, and a package cap 36YA extending from the package substrate 35Y to cover the reference light receiving element 31Y and the signal light receiving element 32Y. In addition, the package cap 36YA has a package cap opening 36aY formed at a position opposite to the reference light receiving element 31Y, and a package cap opening 36bY formed at a position opposite to the signal light receiving element 32Y. Further, the light receiving unit 30YA further includes a band-pass filter 38Y configured to cover the package cap openings 36aY and 36bY. Furthermore, the band-pass filter 38Y is fixed to the package cap 36YA.

In addition, the package cap 36YA has a partition plate 37dY (corresponding to "a shielding means" of the claims) extending from a surface thereof opposite to the reference light receiving element 31Y and the signal light receiving element 32Y to a region A between the reference light receiving element 31 Y and the signal light receiving element 32Y.

The reference light receiving element 31 Y and the signal light receiving element 32Y use neighboring light receiving elements among a plurality of light receiving elements formed on one light receiving element chip in a manufacturing process of the light receiving elements. In addition, the reference light receiving element 31 Y and the signal light receiving element 32Y are used in a state formed on the chip substrate 33Y, without being separated from each other in the manufacturing process. Further, the region A between the reference light receiving element 31 Y and the signal light receiving element 32Y can be formed by grooving.

Accordingly, the region surrounded by the package cap 36YA and the package substrate 35Y is divided by a region of a side on which the reference light receiving element 31Y is disposed and a region of a side on which the signal light receiving element 32Y is disposed, with the partition plate 37dY interposed therebetween.

In addition, the package cap 36YA and the partition plate 37dY are formed of a material for shielding the infrared rays.

(Operations and Effects of Third Embodiment)

With the third embodiment configured as described above, in the inside of the package cap 36YA, the region of the reference light receiving element 31Y side and the region of the signal light receiving element 32Y side can be divided by the partition plate 37dY. Accordingly, the infrared light entering the signal light receiving element 32Y from the infrared light source 21Y through the optical path L1 does not enter the reference light receiving element 31Y after penetrating into the inside of the package cap 36YA. In addition, the infrared light reflected by the surface of the signal light receiving element 32Y does not enter the reference light receiving element 31Y either. Similarly, the infrared light which is to enter the reference light receiving element 31 Y from the infrared light source 21 Y through the optical path L2 and infrared light reflected by the surface of the reference light receiving element 31Y do not enter the signal light receiving element 32Y.

For this reason, crosstalk of the light between the reference light receiving element 31Y and the signal light receiving element 32Y can be reduced, and the lights on the different optical paths can be more accurately detected by the light receiving unit 30YA.

In addition, as the reference light receiving element 31Y and the signal light receiving element 32Y formed adjacent to each other on the light receiving element chip 34Y are used, since the neighboring light receiving elements have substantially the same characteristics, inherent variation between the reference light receiving element 31 Y and the signal light receiving element 32Y can be reduced. For this reason, even when the measurement environment is varied, as variations in the detection values between the reference light receiving element 31 Y and the signal light receiving element 32Y become the same variation characteristics, variations in these detection values can be easily offset. Accordingly, comparison of the detection values can be accurately performed by the reference light receiving element 31 Y and the signal light receiving element 32Y.

Further, crosstalk of the light between the reference light receiving element 31Y and the signal light receiving element 32Y is reduced by the package cap 36YA including the partition plate 37dY. In this way, when a simple configuration in which the partition plate 37dY is installed inside the package cap 36YA is provided, the crosstalk of the light can be reduced.

[Fourth Embodiment]

The fourth embodiment is distinguished from the second embodiment in that the light receiving unit 30Y of the gas concentration calculating device 1Y is replaced with a light receiving unit 30YB (corresponding to "a photo detector" of the claims) having a different configuration, and thus description of the components other than the light receiving unit 30YB will not be repeated. In addition, in the light receiving unit 30YB of the fourth embodiment, the same elements as the light receiving unit 30Y in the second embodiment are designated by the same reference numerals, and description thereof will not be repeated.

(Specific Structure of Light Receiving Unit 30YB)

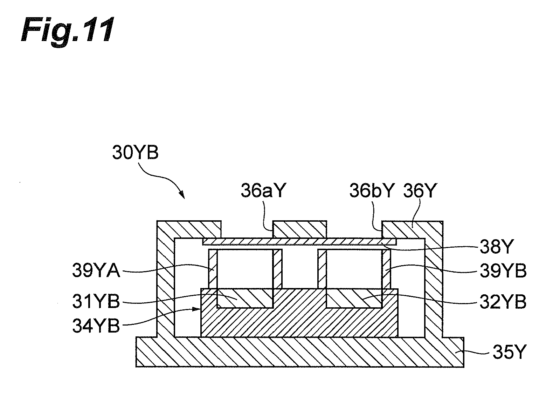

A specific structure of the light receiving unit 30YB will be described. FIG. 11 shows the specific structure of the light receiving unit 30YB. The light receiving unit 30YB includes a light receiving element chip 34YB having a reference light receiving element 31YB (corresponding to "a light receiving element" of the claims) and a signal light receiving element 32YB (corresponding to "a light receiving element" of the claims), a package substrate 35Y on which the light receiving element chip 34YB is placed, and a package cap 36Y extending from the package substrate 35Y to cover the light receiving element chip 34YB. In addition, the package cap 36Y has a package cap opening 36aY formed at a position opposite to the reference light receiving element 31YB and a package cap opening 36bY formed at a position opposite to the signal light receiving element 32YB. Further, the light receiving unit 30YB further includes a band-pass filter 38Y configured to cover the package cap openings 36aY and 36bY. In addition, the band-pass filter 38Y is fixed to the package cap 36Y.

Further, the light receiving unit 30YB further includes a cylindrical cap 39YA (corresponding to "a shielding means" of the claims) placed on the light receiving element chip 34YB at a position corresponding to the reference light receiving element 31 YB, and a cylindrical cap 39YB (corresponding to "a shielding means" of the claims) placed at a position corresponding to the signal light receiving element 32YB. The cylindrical cap 39YA introduces the infrared light entering the inside of the package cap 36Y from the package cap opening 36aY into the reference light receiving element 31YB. Furthermore, the cylindrical cap 39YB introduces the infrared light entering the inside of the package cap 36Y from the package cap opening 36bY into the signal light receiving element 32YB. In addition, the cylindrical caps 39YA and 39YB are formed of a material for shielding the infrared rays.

The reference light receiving element 31 YB and the signal light receiving element 32YB use neighboring light receiving elements among a plurality of light receiving element formed on one light receiving element chip 34YB in a manufacturing process of the light receiving elements.

(Operations and Effects of Fourth Embodiment)

As the fourth embodiment is configured as described above, the infrared light entering the inside of the package cap 36Y from the package cap opening 36aY of the light receiving unit 30YB is introduced into the reference light receiving element 31YB by the cylindrical cap 39YA. In addition, the infrared light entering the inside of the package cap 36Y from the package cap opening 36bY is introduced into the signal light receiving element 32YB by the cylindrical cap 39YB. Accordingly, the infrared light which is to enter the signal light receiving element 32YB from the infrared light source 21Y through the optical path L1 does not enter the reference light receiving element 31YB after penetrating into the inside of the package cap 36Y. Further, the infrared light reflected by the surface of the signal light receiving element 32YB does not enter the reference light receiving element 31YB either. Similarly, the infrared light which is to enter the reference light receiving element 31 YB from the infrared light source 21Y through the optical path L2 and the infrared light reflected by the surface of the reference light receiving element 31 YB do not enter the signal light receiving element 32YB.

For this reason, crosstalk of the light between the reference light receiving element 31YB and the signal light receiving element 32YB can be reduced, and the lights on the different optical paths can be more accurately detected by the light receiving unit 30YB.

In addition, as the cylindrical caps 39YA and 39YB are placed on the light receiving element chip 34YB, the crosstalk of the light between the reference light receiving element 31YB and the signal light receiving element 32YB is reduced. In this way, as a simple configuration of the cylindrical caps 39YA and 39YB is provided, the crosstalk of the light can be reduced.

Further, as the reference light receiving element 31YB and the signal light receiving element 32YB formed adjacent to each other on the light receiving element chip 34YB are used, since the neighboring light receiving elements have substantially the same characteristics, inherent variation between the reference light receiving element 31 YB and the signal light receiving element 32YB can be reduced. For this reason, even when the measurement environment is varied, variations in detection values between the reference light receiving element 31 YB and the signal light receiving element 32YB become the same variation characteristics, and variations in these detection values can be easily offset. Accordingly, comparison of the detection values can be accurately performed by the reference light receiving element 31 YB and the signal light receiving element 32YB.

Another aspect of the present invention is not limited to the above-mentioned second to fourth embodiments.

For example, the band-pass filter 38Y used in the light receiving units 30Y, 30YA and 30YB can be replaced with a window member through which light passes. In this case, a band-pass filter installed at a predetermined position on the optical paths L1 and L2 from the infrared light source 21Y to the light receiving units 30Y, 30YA and 30YB is provided.

In addition, in the light receiving units 30Y, 30YA and 30YB, while the case including two light receiving elements (31Y, 32Y, 31YB, 32YB) has been described, the number of light receiving elements is not limited thereto but may be three or more.

Further, in the second to fourth embodiments, while the case in which the concentration of the carbon dioxide is calculated by the gas concentration calculating device 1 Y has been described, it is needless to say that concentrations of other gases can be calculated.

Furthermore, while the infrared light source 21Y configured to emit the infrared rays is used as a light source, light of another wavelength range may be emitted. In this case, the reference light receiving elements 31Y and 31YB and the signal light receiving elements 32Y and 32YB that are capable of receiving a wavelength range of the light emitted from the light source are used.

In addition, in the second to fourth embodiments, while the gas concentration calculating device 1Y including the comparison gas chamber 41 Y and the measuring gas chamber 42Y has been exemplarily described as a gas concentration calculating device for calculating a gas concentration, a configuration of a device for calculating a gas concentration is not limited thereto.

Further, in the second to fourth embodiments, while an example in which the photo detector according to another aspect of the present invention is applied to a photo detector used in a gas concentration calculating device has been described, the photo detector according to another aspect of the present invention can be applied to various devices as long as the lights on the different optical paths are received.

[Fifth Embodiment]

(Overall Configuration of Gas Concentration Calculating Device 1Z)

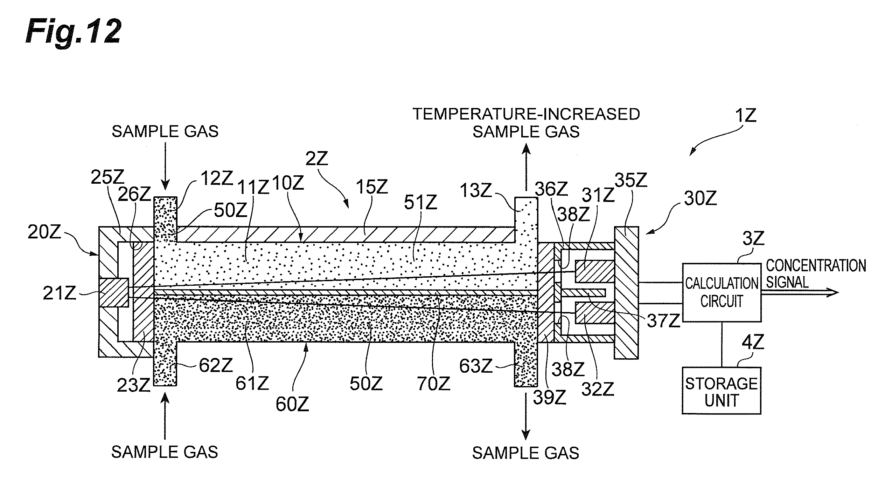

First, an overall configuration of the gas concentration calculating device 1Z according to a fifth embodiment will be described. FIG. 12 is a schematic cross-sectional view showing the gas concentration calculating device. The gas concentration calculating device 1Z includes a gas concentration measuring module 2Z configured to receive infrared light from an infrared light source 21Z (corresponding to "a light source" of the claims) to measure its energy, a calculation circuit 3Z (corresponding to "a gas concentration calculating module" of the claims) configured to calculate a gas concentration based on a measurement result by the gas concentration measuring module 2Z, and a storage unit 4Z (corresponding to "a storage means" of the claims) configured to store information when the calculation circuit 3Z calculates the gas concentration, calculating a concentration of a target gas. The gas concentration calculated by the calculation circuit 3Z is output to a control device (not shown), and used to control, for example, an air-conditioning system, and so on. In addition, in the fifth embodiment, the case in which the carbon dioxide in the sample gas introduced into the gas concentration measuring module 2Z is used as a target gas for concentration calculation will be described.

The gas concentration measuring module 2Z includes a temperature rising side gas cell 10Z (corresponding to "a first gas cell" of the claims) configured to form a temperature rising side introduction space 11 Z (corresponding to "a first introduction space" of the claims) in which a sample gas 50Z is introduced, a normal temperature side gas cell 60Z (corresponding to "a second gas cell" of the claims) configured to form a normal temperature side introduction space 61Z (corresponding to "a second introduction space" of the claims) into which the sample gas 50Z is introduced as it is, a light source unit 20Z disposed at one end of the temperature rising side gas cell 10Z and the normal temperature side gas cell 60Z, and a light receiving unit 30Z (corresponding to "a signal light receiving means and a reference light receiving means" of the claims) disposed at the other end of the temperature rising side gas cell 10Z and the normal temperature side gas cell 60Z and configured to receive light emitted from the light source unit 20Z.

In addition, the gas concentration measuring module 2Z further includes a heater 15Z (corresponding to "a first heater or a concentration change means" of the claims) installed at the temperature rising side gas cell 10Z, and a thermal insulating member 70Z disposed between the temperature rising side gas cell 10Z and the normal temperature side gas cell 60Z. The heater 15Z raises a temperature of the sample gas 50Z in the temperature rising side introduction space 11Z. In addition, in the fifth embodiment, the sample gas 50Z (a normal temperature: for example, 25 degrees) introduced into the temperature rising side introduction space 11 Z is raised by 10 degrees by the heater 15Z to obtain a sample gas 51Z after an increase in temperature. Accordingly, the temperature-increased sample gas 51 Z in the temperature rising side introduction space 11Z approaches a temperature 10 degrees higher than that of the sample gas 50Z in the normal temperature side introduction space 61Z, which is the same gas as the sample gas 50Z for measuring the concentration of the carbon dioxide.

The temperature rising side gas cell 10Z has a gas introduction section 12Z formed at one end side of the temperature rising side gas cell 10Z and configured to introduce the sample gas 50Z into the temperature rising side introduction space 11Z, and a gas discharge section 13Z formed at the other end side of the temperature rising side gas cell 10Z and configured to discharge the temperature-increased sample gas 51Z in the temperature rising side introduction space 11Z to the outside. In addition, the normal temperature side gas cell 60Z has a gas introduction section 62Z formed at one end side of the normal temperature side gas cell 60Z and configured to introduce the sample gas 50Z into the normal temperature side introduction space 61Z, and a gas discharge section 63Z formed at the other end side of the normal temperature side gas cell 60Z and configured to discharge the sample gas 50Z introduced into the normal temperature side introduction space 61Z to the outside.

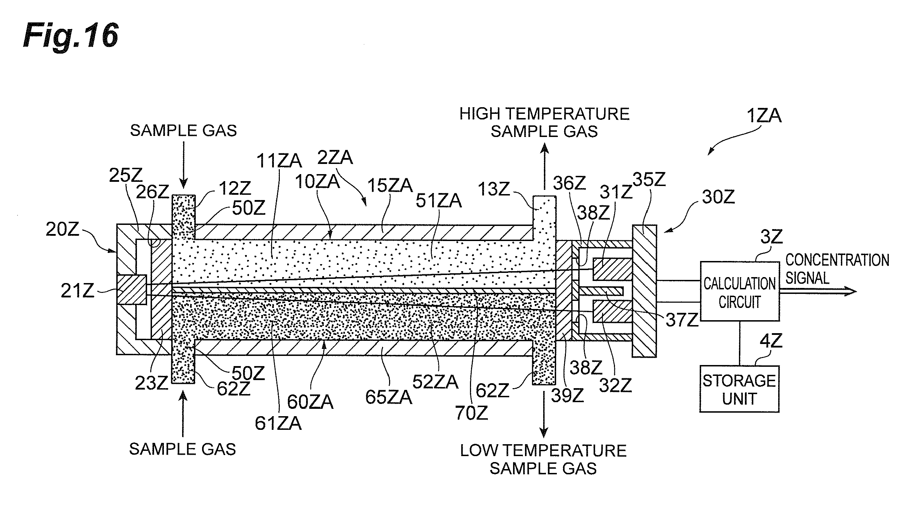

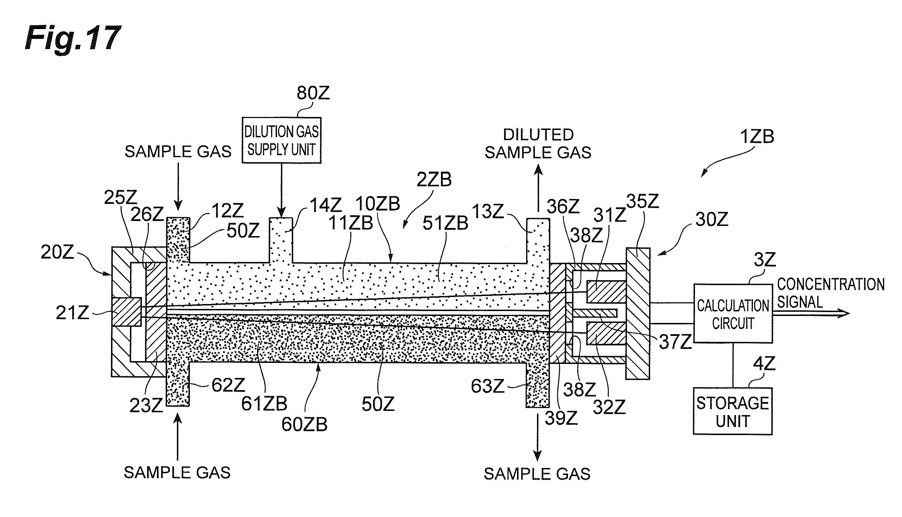

In addition, while not shown, the gas introduction section 12Z and the gas introduction section 62Z are connected to the same introducing tube to introduce the sample gas 50Z, so that the same sample gas 50Z is introduced into the temperature rising side gas cell 10Z and the normal temperature side gas cell 60Z. Further, in FIG. 12, dots in the temperature rising side gas cell 10Z and the normal temperature side gas cell 60Z represent molecules of the gas, and an area with a high density of dots has a higher concentration of gas than an area with a low density of dots. Furthermore, even in the following FIGS. 16 and 17, similar to FIG. 12, the concentration of the gas is represented by dots in the gas cell.

The light source unit 20Z includes a housing 25Z coupled to the temperature rising side gas cell 10Z and the normal temperature side gas cell 60Z, an infrared light source 21Z disposed in the housing 25Z, an opening 26Z formed at an area in the housing 25Z opposite to the infrared light source 21Z and configured to guide the infrared light emitted from the infrared light source 21 Z to the outside of the housing 25Z, and a window member 23Z configured to cover the opening 26Z. The infrared light emitted from the infrared light source 21Z is introduced into the temperature rising side gas cell 10Z and the normal temperature side gas cell 60Z via the window member 23Z. Here, the infrared light source 21Z is used to emit light having a wavelength range of 4.2 µm to 4.3 µm. In addition, the window member 23Z is formed of a material having a high transmittance with respect to the infrared rays.

The light receiving unit 30Z includes a reference light receiving element 31Z (corresponding to "a reference light receiving means" of the claims) and a signal light receiving element 32Z (corresponding to "a signal light receiving means" of the claims) disposed on a substrate 35Z, a cap 36Z configured to cover the reference light receiving element 31Z and the signal light receiving element 32Z, a partition wall 37Z extending from the cap 36Z to a region between the reference light receiving element 31Z and the signal light receiving element 32Z, openings 38Z formed at areas in the cap 36Z opposite to the reference light receiving element 31Z and the signal light receiving element 32Z, and a band-pass filter 39Z configured to cover the openings 38Z. The reference light receiving element 31Z and the signal light receiving element 32Z output an energy value of the received infrared light to the calculation circuit 3Z. The band-pass filter 39Z configured to allow only the light having a wavelength range of 4.2 µm to 4.3 µm to pass through is used. In addition, the reference light receiving element 31Z is opposite to the other end of the temperature rising side gas cell 10Z, and the signal light receiving element 32Z is opposite to the other end of the normal temperature side gas cell 60Z.

In addition, while not shown, when the band-pass filter 39Z is not installed at a position shown in FIG. 12, the band-pass filter may be installed at a position of the window member 23Z of FIG. 12. That is, a position at which the band-pass filter is disposed is not particularly limited as long as it is disposed on the optical path between the light source unit 20Z and the light receiving unit 30Z.

According to the above-mentioned configuration, among the infrared light emitted from the infrared light source 21Z, the infrared light entering the reference light receiving element 31Z passes through the sample gas 51Z which is raised in temperature by 10 degrees in the temperature rising side introduction space 11Z. The infrared light entering the signal light receiving element 32Z passes through the sample gas 50Z in the normal temperature side introduction space 61Z. In this way, the infrared light received by the reference light receiving element 31Z passes through the sample gas 51Z which is raised in temperature with a concentration lowered by thermal expansion, in comparison with the infrared light received by the signal light receiving element 32Z. That is, the reference light receiving element 31Z and the signal light receiving element 32Z can simultaneously receive the infrared light having different absorption amounts by the carbon dioxide in the sample gases 50Z (50Z, 51Z), as the concentrations of the sample gases 50Z (50Z, 51Z) are different. In addition, the temperature-increased sample gas 51Z has a lower concentration than the sample gas 50Z, and when the infrared light passes therethrough, the absorption amount by the carbon dioxide is small. For this reason, the reference light receiving element 31 Z receives the infrared light of a high energy value in comparison with the signal light receiving element 32Z.

(Stored Information of Storage Unit 4Z)

Next, information stored by the storage unit 4Z will be described. The storage unit 4Z previously stores an approximate equation showing a correlation between the concentration of the carbon dioxide and the ratio of the energy values of the infrared lights received by the reference light receiving element 31Z and the signal light receiving element 32Z.

In general, provided that an energy value of infrared rays from a light source is I0, an energy value of the infrared rays arriving at a light receiving means is I, an optical path length from the light source to the light receiving means is 1, a concentration of a target gas is C, and an absorption coefficient is µ, according to Lambert-Beer's Law, a relation represented by the following Equation (1) is satisfied.

$$I = I0\exp(-\mu \cdot C \cdot l)\dots(1)$$

Based on this relation, using Lambert-Beer's Law, at each concentration C of the carbon dioxide in the sample gas 50Z introduced into the temperature rising side introduction space 11 Z and the normal temperature side introduction space 6 1 Z, an energy value A received by the reference light receiving element 31Z and an energy value B received by the signal light receiving element 32Z are previously calculated.

First, when the energy value B received by the signal light receiving element 32Z is calculated, already known I0, µ, C and 1 are substituted into Equation (1) to obtain I, and thus, the energy value B is calculated. Here, in Equation (1), the concentration C represents the concentration of the carbon dioxide in the sample gas 50Z.

Next, even in the energy value A received by the reference light receiving element 31Z, each concentration C of the carbon dioxide in the sample gas 50Z is calculated using Equation (1). Here, the infrared light received by the reference light receiving element 31Z passes through the temperature-increased sample gas 51Z. Accordingly, a concentration C1 of the carbon dioxide in the temperature-increased sample gas 51Z is calculated from the concentration C of the carbon dioxide in the sample gas 50Z. The calculated concentration C1 and the already known I0, $\mu$ and 1 are substituted into Equation (1) to obtain I, and thus, the energy value A is calculated. Accordingly, when the sample gas 50Z containing the carbon dioxide of the concentration C is introduced into the temperature rising side introduction space 11Z, the energy value A received by the reference light receiving element 31Z can be calculated using Equation (1). In addition, the temperature-increased sample gas 51Z has a temperature 10 degrees higher than that of the sample gas 50Z. Accordingly, for example, a gas state equation PV = nRT is used, and the concentration C1 of the carbon dioxide in the temperature-increased sample gas 51Z can be calculated and obtained from the concentration C of the carbon dioxide in the sample gas 50Z. Alternatively, after the concentration C and the concentration C1 are individually measured, the energy values A and B may be obtained using Equation (1).

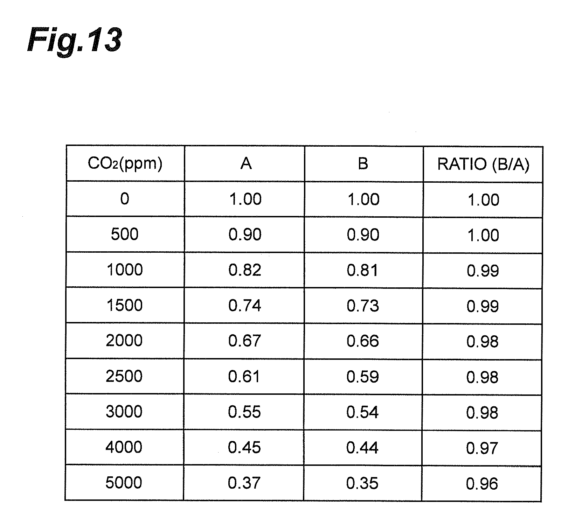

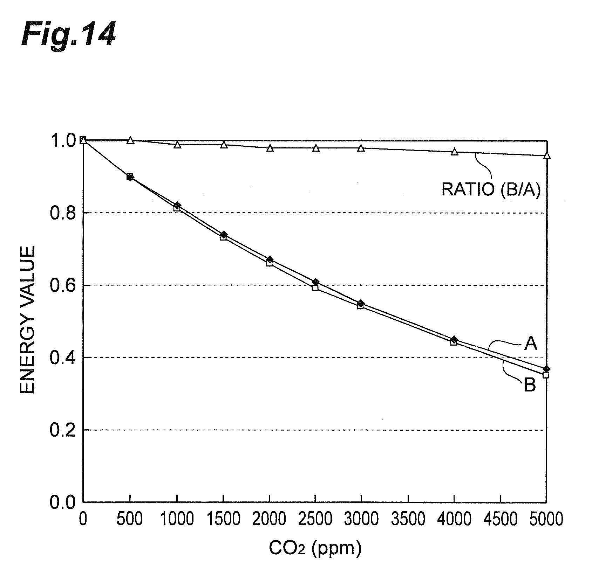

Further, a ratio (B/A) between the energy value B and the energy value A is calculated. According to the value calculated from these and the concentration of the carbon dioxide in the sample gas 50Z, as shown in FIG. 13, a database representing correlations between the concentrations of the carbon dioxide and the ratios of the energy values is drafted. Furthermore, according to the database represented in FIG. 13, a graph representing the correlations between the concentrations of the carbon dioxide and the ratios of the energy values shown in FIG. 14 is obtained, and an approximate equation (for example, a concentration = f(ratio)) between the ratios (B/A) of the energy values and the concentrations of the carbon dioxide is calculated. The calculated approximate equation is stored in the storage unit 4Z.

In addition, for the convenience of drafting the database, the database of FIG. 13 is standardized such that the energy values A and B become 1 when the concentration of the carbon dioxide in the sample gas 50Z is zero ppm.

As the ratio between the energy value A received by the reference light receiving element 31Z and the energy value B received by the signal light receiving element 32Z corresponds to the concentration of the carbon dioxide in the sample gas 50Z, using the calculated approximate equation, based on the ratios of the energy values of the lights actually received by the reference light receiving element 31Z and the signal light receiving element 32Z, the concentration of the carbon dioxide in the sample gas 50Z can be calculated.

(Concentration Calculation Processing of Carbon Dioxide)

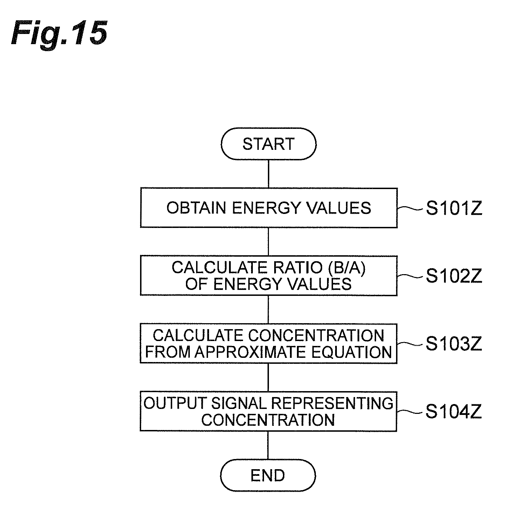

Next, a flow of processing in which the calculation circuit 3Z calculates the concentration of carbon dioxide from the energy values of the lights received by the reference light receiving element 31Z and the signal light receiving element 32Z will be described. In addition, the calculation circuit 3Z is a circuit including a CPU or the like. FIG. 15 is a flowchart showing a flow of carbon dioxide concentration calculation processing.

In step S101Z, the calculation circuit 3Z obtains the energy value A of the light received by the reference light receiving element 31Z and the energy value B of the light received by the signal light receiving element 32Z.

Next, in step S102Z, the calculation circuit 3Z calculates the ratio (B/A) between the energy value B and the energy value A. In step S103Z, the calculation circuit 3Z calculates the concentration of the carbon dioxide from the ratio (B/A) calculated in step S102Z using the approximate equation stored in the storage unit 4Z. As the concentration is calculated using the approximate equation, the calculation processing can be easily performed.

In step S104Z, the calculation circuit 3Z outputs a signal representing the calculated concentration of the carbon dioxide to a control device (not shown). The signal representing the concentration of the carbon dioxide is used to, for example, control air-conditioning or the like in the control device.

(Operations and Effects of Fifth Embodiment)

In the fifth embodiment, the reference light receiving element 31Z receives the infrared light passing through the temperature rising side introduction space 11Z. The signal light receiving element 32Z receives the infrared light passing through the normal temperature side introduction space 61Z. In addition, the heater 15Z raises the temperature of the sample gas 50Z introduced into the temperature rising side introduction space 11Z to a predetermined temperature to obtain the temperature-increased sample gas 51Z. Accordingly, the concentration of the carbon dioxide in the temperature-increased sample gas 51Z and the concentration of the carbon dioxide in the sample gas 50Z in the normal temperature side introduction space 61Z become different concentrations. For this reason, the infrared light passing through an introduction space (the temperature rising side introduction space 11Z and the normal temperature side introduction space 61Z) in which the concentrations of the carbon dioxide are different, i.e., the infrared lights having different absorption amounts by the carbon dioxide, can be simultaneously measured by the reference light receiving element 31Z and the signal light receiving element 32Z.

In addition, the gas concentration calculating device 1Z is configured to measure the infrared lights having different absorption amounts, without using the comparison gas chamber or the like, in which gases representing different variation characteristics due to being in a saturated state although being of the same kind as the gas to be measured are hermetically contained, similar to the gas concentration calculating device disclosed in Cited Document 1. In particular, the same sample gas 50Z is introduced into the temperature rising side gas cell 10Z and the normal temperature side gas cell 60Z to be changed into different concentrations, without preparing the gases (gases in the comparison gas chamber) having different variation characteristics from the beginning as disclosed in Cited Document 1. For this reason, even when intensity, a temperature, or the like of the infrared light source 21Z is varied, since the temperature-increased sample gas 51Z and the sample gas 50Z are the same gas having different temperatures, variation characteristics of the measured values of the reference light receiving element 31Z and the signal light receiving element 32Z are equal to each other. As described above, since the variation characteristics of the measured values of the reference light receiving element 31Z and the signal light receiving element 32Z are equal to each other, based on these measured values, the variations in the measured values due to the intensity, temperature, or the like of the infrared light source 21Z can be easily offset, and the gas concentration can be more accurately calculated.

In addition, since there is no vibration or the like to vary an optical path length and no position difference or additional noise due to the vibration, a decrease in optical detection accuracy of the gas concentration measuring module can be prevented.

Further, the gas concentration calculating device 1Z raises the temperature of the sample gas 50Z introduced into the temperature rising side introduction space 11Z using the heater 15Z to obtain the temperature-increased sample gas 51Z, and the temperature-increased sample gas 51 Z in the temperature rising side introduction space 11 Z is reduced in concentration in comparison with the sample gas 50Z in the normal temperature side introduction space 61Z. As described above, using expansion of a gas due to application of heat, the concentration of the carbon dioxide in the temperature-increased sample gas 51Z in the temperature rising side introduction space 11Z and the concentration of the carbon dioxide in the sample gas 50Z in the normal temperature side introduction space 61Z can be easily changed into different concentrations.

In addition, as the thermal insulating member 70Z is provided, heat transfer between the temperature rising side gas cell 10Z and the normal temperature side gas cell 60Z is prevented, and the sample gas 50Z can be efficiently increased in temperature. Further, a temperature difference between the temperature-increased sample gas 51Z and the sample gas 50Z in the normal temperature side gas cell 60Z can be more securely maintained.

Furthermore, the lights respectively received by the reference light receiving element 31Z and the signal light receiving element 32Z can have the same wavelength by the band-pass filter 39Z, and a decrease in optical detection accuracy due to the different wavelengths of the lights respectively received by the reference light receiving element 31Z and the signal light receiving element 32Z can be prevented.

In addition, as the infrared light source 21Z emits the infrared rays, using a phenomenon that energy is attenuated by the carbon dioxide when the infrared rays pass through the sample gas 50Z and the temperature-increased sample gas 51Z, concentrations of the carbon dioxide in the sample gas 50Z and the temperature-increased sample gas 51Z can be calculated.

Further, using a phenomenon that energy is attenuated when the infrared light passes through the carbon dioxide in the sample gas 50Z and the temperature-increased sample gas 51Z, concentrations of the carbon dioxide in the sample gas 50Z and the temperature-increased sample gas 51Z can be calculated.

Furthermore, as the approximate equation is previously stored in the storage unit 4Z, based on the approximate equation, a concentration of a target gas can be accurately calculated.

[Sixth Embodiment]

In a sixth embodiment, the sample gas 50Z through which the infrared light entering the reference light receiving element 31Z passes and the sample gas 50Z through which the infrared light entering the signal light receiving element 32Z passes are increased in temperature by separate heaters.

(Overall Configuration of Gas Concentration Calculating Device 1ZA)

First, an overall configuration of the gas concentration calculating device 1ZA according to the sixth embodiment will be described. FIG. 16 is a schematic cross-sectional view showing the gas concentration calculating device. The gas concentration calculating device 1ZA includes a gas concentration measuring module 2ZA configured to receive the infrared light from the infrared light source 21Z (corresponding to "a light source" of the claims) to measure its energy, a calculation circuit 3Z (corresponding to "a gas concentration calculating module" of the claims) configured to calculate a gas concentration based on a measurement result by the gas concentration measuring module 2ZA, and a storage unit 4Z (corresponding to "a storage means" of the claims) configured to store information when the calculation circuit 3Z calculates the gas concentration, calculating a concentration of a target gas. The gas concentration calculated by the calculation circuit 3Z is output to a control device (not shown), and used to control, for example, an air-conditioning system or the like. In addition, in the sixth embodiment, an example in which the carbon dioxide in the sample gas introduced into the gas concentration measuring module 2ZA is provided as a target gas for concentration calculation will be described.

The gas concentration measuring module 2ZA includes a high temperature side gas cell 10ZA (corresponding to "a first gas cell" of the claims) configured to form a high temperature side introduction space 11ZA (corresponding to "a first introduction space" of the claims) into which the sample gas 50Z is introduced, a low temperature side gas cell 60ZA (corresponding to "a second gas cell" of the claims) configured to form a low temperature side introduction space 61ZA (corresponding to "a second introduction space" of the claims) into which the sample gas 50Z is introduced, a light source unit 20Z disposed at one end of the high temperature side gas cell 10ZA and the low temperature side gas cell 60ZA, and a light receiving unit 30Z (corresponding to "a signal light receiving means and a reference light receiving means" of the claims) disposed at the other end of the high temperature side gas cell 10ZA and the low temperature side gas cell 60ZA and configured to receive light emitted from the light source unit 20Z. In addition, while not shown, the gas introduction section 12Z and the gas introduction section 62Z are connected to the same introducing tube to introduce the sample gas 50Z, and the same sample gas 50Z is introduced into the high temperature side gas cell 10ZA and the low temperature side gas cell 60ZA.

In addition, the gas concentration measuring module 2ZA further includes a high temperature side heater 15ZA (corresponding to "a first heater or a concentration change means" of the claims) installed at the high temperature side gas cell 10ZA, a low temperature side heater 65ZA (corresponding to "a second heater or a concentration change means" of the claims) installed at the low temperature side gas cell 60ZA, and a thermal insulating member 70Z disposed between the high temperature side gas cell 10ZA and the low temperature side gas cell 60ZA. The high temperature side heater 15ZA heats the sample gas 50Z introduced into the high temperature side introduction space 11 ZA of the high temperature side gas cell 10ZA to a first predetermined temperature. Accordingly, a high temperature sample gas 51ZA having the first predetermined temperature can be obtained from the sample gas 50Z in a normal temperature state. In addition, the low temperature side heater 65ZA heats the sample gas 50Z introduced into the low temperature side introduction space 61ZA of the low temperature side gas cell 60ZA to a second predetermined temperature lower than the first predetermined temperature. Accordingly, a low temperature sample gas 52ZA having the second predetermined temperature can be obtained from the sample gas 50Z in a normal temperature state. In addition, in the sixth embodiment, the high temperature side heater 15ZA and the low temperature side heater 65ZA are controlled such that the high temperature sample gas 51ZA in the high temperature side introduction space 11ZA is heated to a temperature 10 degrees higher with respect to the low temperature sample gas 52ZA in the low temperature side introduction space 61ZA.

The high temperature side gas cell 10ZA has a gas introduction section 12Z formed at one end side of the high temperature side gas cell 10ZA and configured to introduce the sample gas 50Z into the high temperature side introduction space 11ZA, and a gas discharge section 13Z formed at the other end side of the high temperature side gas cell 10ZA and configured to discharge the high temperature sample gas 51a of the high temperature side introduction space 11ZA to the outside. In addition, in the low temperature side gas cell 60ZA, the gas introduction section 62Z configured to introduce the sample gas 50Z into the low temperature side introduction space 61ZA is installed at one end side of the low temperature side gas cell 60ZA, and the gas discharge section 63Z configured to discharge the low temperature sample gas 52ZA in the low temperature side introduction space 61ZA to the outside is installed at the other end side of the low temperature side gas cell 60ZA.

In addition, since the configurations of the light source unit 20Z and the light receiving unit 30Z are the same as in the fifth embodiment, like reference numerals designate like elements and detailed description thereof will not be repeated.

According to the above-mentioned configuration, among the infrared light emitted from the infrared light source 21Z, the infrared light entering the reference light receiving element 31Z passes through the high temperature sample gas 51ZA increased to the first predetermined temperature in the high temperature side introduction space 11ZA. The infrared light entering the signal light receiving element 32Z passes through the low temperature sample gas 52ZA increased to the second predetermined temperature in the low temperature side introduction space 61ZA. That is, the infrared light received by the reference light receiving element 31Z passes through the high temperature sample gas 51ZA having a concentration further lowered by thermal expansion in comparison with the infrared light received by the signal light receiving element 32Z. Accordingly, as the concentrations of the sample gases 50Z (51ZA, 52ZA) are different, the reference light receiving element 31Z and the signal light receiving element 32Z can simultaneously receive the infrared lights having different absorption amounts by the carbon dioxide in the sample gases 50Z (51ZA, 52ZA). In addition, since the high temperature sample gas 51ZA has a higher temperature and a lower concentration than the low temperature sample gas 52ZA, the absorption amount of the infrared light by the carbon dioxide is small. For this reason, the reference light receiving element 31Z receives the infrared light having a high energy value in comparison with the signal light receiving element 32Z.

(Stored Information of Storage Unit 4Z)

Next, information stored in the storage unit 4Z will be described. An approximate equation representing a correlation between the concentration of the carbon dioxide and the ratio of the energy values of the infrared lights received by the reference light receiving element 31Z and the signal light receiving element 32Z is previously stored in the storage unit 4Z.

In addition, the sample gas 50Z introduced into the high temperature side introduction space 11 ZA and the low temperature side introduction space 61ZA has a normal temperature (for example, 25 degrees), the low temperature sample gas 52ZA is heated to the second predetermined temperature (for example, 35 degrees) 10 degrees higher than that of the normal temperature by the low temperature side heater 65ZA, and the high temperature sample gas 51ZA is heated to the first predetermined temperature (for example, 45 degrees) 10 degrees higher than that of the low temperature sample gas 52ZA by the high temperature side heater 15ZA.

In addition, even in the sixth embodiment, similar to the fifth embodiment, using Lambert-Beer's Law represented by the following Equation (1), at each concentration C of the carbon dioxide in the sample gas 50Z introduced into the high temperature side introduction space 11ZA and the low temperature side introduction space 61ZA, the energy value A received by the reference light receiving element 31Z and the energy value B received by the signal light receiving element 32Z are previously calculated.

$$I = I0exp(-\mu \cdot C \cdot 1)...(1)$$

First, the case in which the energy value B received by the signal light receiving element 32Z is calculated will be described. The infrared light received by the signal light receiving element 32Z passes the low temperature sample gas 52ZA having a concentration lower than that of the sample gas 50Z. For this reason, a concentration C2 of the carbon dioxide in the low temperature sample gas 52ZA is calculated from the concentration C of the carbon dioxide of the sample gas 50Z. Here, the low temperature sample gas 52ZA has a temperature 10 degrees higher than that of the sample gas 50Z (a normal temperature). Accordingly, similar to the fifth embodiment, the concentration C2 of the carbon dioxide in the low temperature sample gas 52ZA can be calculated and obtained from the concentration C of the carbon dioxide in the sample gas 50Z. Alternatively, the concentration C2 may be separately measured.

The calculated or measured concentration C2 and already known I0, μ and 1 are substituted into Equation (1) to obtain I, and the energy value B is calculated. Accordingly, when the sample gas 50Z having the carbon dioxide of the concentration C is introduced into the low temperature side introduction space 61ZA, the energy value B received by the signal light receiving element 32Z can be calculated using Equation (1).

Next, when the energy value A received by the reference light receiving element 31Z is calculated, similar to the case in which the energy value B is calculated, a concentration C3 of the carbon dioxide in the high temperature sample gas 51ZA is calculated from the concentration C of the carbon dioxide in the sample gas 50Z. Alternatively, the concentration C3 may be separately measured. The calculated or measured concentration C3 and already known I0, μ and 1 are substituted into Equation (1) to obtain I, and the energy value A is calculated.

Further, the ratio (B/A) between the energy value A and the energy value B is calculated. Then, similar to the fifth embodiment, these calculated values correspond to the concentration C of the carbon dioxide in the sample gas 50Z to draft the database representing the correlation between the concentration of the carbon dioxide and the ratio of the energy values, as shown in FIG. 13. Furthermore, the graph representing the correlation between the concentration of the carbon dioxide and the ratio of the energy values shown in FIG. 14 is obtained from the database shown in FIG. 13, and the approximate equation (for example, a concentration = f (ratio)) between the ratio (B/A) of the energy values and the concentration of the carbon dioxide is calculated. The calculated approximate equation is stored in the storage unit 4Z.

As the ratio between the energy value A received by the reference light receiving element 31Z and the energy value B received by the signal light receiving element 32Z corresponds to the concentration of the carbon dioxide in the sample gas 50Z, using the calculated approximate equation, based on the ratio of the energy values of the lights actually received by the reference light receiving element 31Z and the signal light receiving element 32Z, the concentration of the carbon dioxide in the sample gas 50Z can be calculated.

(Concentration Calculation Processing of Carbon Dioxide)

In the processing of calculating the concentration of the carbon dioxide by the calculation circuit 3Z from the energy values of the lights received by the reference light receiving element 31Z and the signal light receiving element 32Z, since the processing is the same as the processing described with reference to FIG. 15 in the fifth embodiment, detailed description thereof will not be repeated.

(Operations and Effects of Sixth Embodiment)

In the sixth embodiment, the reference light receiving element 31Z receives the infrared light passing through the high temperature side introduction space 11ZA. The signal light receiving element 32Z receives the infrared light passing through the low temperature side introduction space 61ZA. In addition, the sample gas 50Z introduced into the low temperature side introduction space 61ZA is heated to the second predetermined temperature by the low temperature side heater 65ZA to obtain the low temperature sample gas 52ZA. Further, the sample gas 50Z introduced into the high temperature side introduction space 11ZA is heated to the first predetermined temperature higher than the second predetermined temperature by the high temperature side heater 15ZA to obtain the high temperature sample gas 51ZA. Accordingly, the concentration of the carbon dioxide in the high temperature sample gas 51ZA is different from the concentration of the carbon dioxide in the sample gas 50Z in the low temperature sample gas 52ZA. For this reason, the infrared lights passing through the introduction spaces (the high temperature side introduction space 11ZA and the low temperature side introduction space 6 1 ZA) having different concentrations of the carbon dioxide, i.e., the infrared lights having different absorption amounts by the carbon dioxide, can be simultaneously measured by the reference light receiving element 31Z and the signal light receiving element 32Z.

In addition, the gas concentration calculating device 1ZA is configured to measure the infrared lights having different absorption amounts, without using the comparison gas chamber or the like, in which gases representing different variation characteristics due to being in a saturated state although being of the same kind as the gas to be measured are hermetically contained, similar to the gas concentration calculating device disclosed in Cited Document 1. In particular, the same sample gas 50Z is introduced into the high temperature side gas cell 10ZA and the low temperature side gas cell 60ZA to be changed into different concentrations, without preparing the gases (gases in the comparison gas chamber) having different variation characteristics from the beginning as disclosed in Cited Document 1. For this reason, even when intensity, a temperature, or the like of the infrared light source 21Z is varied, since the high temperature sample gas 51ZA and the low temperature sample gas 52ZA are the same gas having different temperatures, variation characteristics of the measured values of the reference light receiving element 31Z and the signal light receiving element 32Z are equal to each other. As described above, since the variation characteristics of the measured values of the reference light receiving element 31Z and the signal light receiving element 32Z are equal to each other, based on these measured values, the variations in the measured values due to the intensity, temperature, or the like of the infrared light source 21Z can be easily offset, and the gas concentration can be more accurately calculated.

Further, since there is no vibration or the like to vary an optical path length and no position difference or additional noise due to the vibration, a decrease in optical detection accuracy of the gas concentration measuring module can be prevented.

Furthermore, the gas concentration calculating device 1ZA heats the sample gas 50Z to different temperatures using the high temperature side heater 15ZA and the low temperature side heater 65ZA, and thus, the high temperature sample gas 51 ZA and the low temperature sample gas 52ZA have different concentrations. In this way, using expansion of a gas due to application of heat, the concentration of the carbon dioxide in the high temperature sample gas 51ZA in the high temperature side introduction space 11 ZA and the concentration of the carbon dioxide in the low temperature sample gas 52ZA in the low temperature side introduction space 61ZA can be easily changed into different concentrations.

In addition, as the thermal insulating member 70Z is provided, heat transfer between the high temperature side gas cell 10ZA and the low temperature side gas cell 60ZA is prevented, and the sample gas 50Z can be easily increased in temperature. Further, a temperature difference between the high temperature sample gas 51ZA and the low temperature sample gas 52ZA can be more securely maintained.

Furthermore, the lights respectively received by the reference light receiving element 31Z and the signal light receiving element 32Z can have the same wavelength by the band-pass filter 39Z, and a decrease in optical detection accuracy due to the different wavelengths of the lights respectively received by the reference light receiving element 31Z and the signal light receiving element 32Z can be prevented.

In addition, as the infrared light source 21Z emits the infrared rays, using a phenomenon that energy is attenuated by the carbon dioxide when the infrared rays pass through the high temperature sample gas 51ZA and the low temperature sample gas 52ZA, concentrations of the carbon dioxide in the high temperature sample gas 51ZA and the low temperature sample gas 52ZA can be calculated.

Further, using a phenomenon that energy is attenuated when the infrared light passes through the carbon dioxide in the high temperature sample gas 51ZA and the low temperature sample gas 52ZA, concentrations of the carbon dioxide in the high temperature sample gas 51ZA and the low temperature sample gas 52ZA can be calculated.

Furthermore, as the approximate equation is previously stored in the storage unit 4Z, based on the approximate equation, a concentration of a target gas can be accurately calculated.

In addition, in the sixth embodiment, while the sample gas 50Z introduced into the low temperature side introduction space 61ZA is heated to the second predetermined temperature higher than the normal temperature by the low temperature side heater 65ZA, it is not limited thereto. For example, the low temperature side heater 65ZA may be used to maintain the sample gas 50Z introduced into the low temperature side introduction space 61ZA at the normal temperature (for example, 25 degrees).

[Seventh Embodiment]

In a seventh embodiment, as a dilution gas is used to dilute the sample gas 50Z, the infrared light entering the reference light receiving element 31Z and the infrared light entering the signal light receiving element 32Z pass through sample gases having different concentrations.

(Overall Configuration of Gas Concentration Calculating Device 1ZB)

First, an overall configuration of the gas concentration calculating device 1ZB according to the seventh embodiment will be described. FIG. 17 is a schematic cross-sectional view showing the gas concentration calculating device. The gas concentration calculating device 1ZB includes a gas concentration measuring module 2ZB configured to receive the infrared light from the infrared light source 21Z (corresponding to "a light source" of the claims) to measure its energy, a calculation circuit 3Z (corresponding to "a gas concentration calculating module" of the claims) configured to calculate a gas concentration based on a measurement result by the gas concentration measuring module 2ZB, and a storage unit 4Z (corresponding to "a storage means" of the claims) configured to store information when the calculation circuit 3Z calculates the gas concentration, calculating a concentration of a target gas. The gas concentration calculated by the calculation circuit 3Z is output to a control device (not shown) to be used to control, for example, an air-conditioning system or the like. In addition, in the seventh embodiment, an example in which the carbon dioxide in the sample gas introduced into the gas concentration measuring module 2ZB is provided as a target gas for concentration calculation will be described.

The gas concentration measuring module 2ZB includes a dilution side gas cell 10ZB (corresponding to "a first gas cell" of the claims) configured to form a dilution side introduction space 11ZB (corresponding to "a first introduction space" of the claims) into which the sample gas 50Z is introduced, a non-dilution side gas cell 60ZB (corresponding to "a second gas cell" of the claims) configured to form a non-dilution side introduction space 61ZB (corresponding to "a second introduction space" of the claims) into which the sample gas 50Z is introduced as it is, a dilution gas supply unit 80Z (corresponding to "an inert gas supply unit and a concentration change means" of the claims) configured to introduce a dilution gas (corresponding to "an inert gas" of the claims) into the dilution side introduction space 11ZB, a light source unit 20Z disposed at one end of the dilution side gas cell 10ZB and the non-dilution side gas cell 60ZB, and a light receiving unit 30Z (corresponding to "a signal light receiving means and a reference light receiving means" of the claims) disposed at the other end of the dilution side gas cell 10ZB and the non-dilution side gas cell 60ZB and configured to receive the light emitted from the light source unit 20Z. In addition, while not shown, the gas introduction section 12Z and the gas introduction section 62Z are connected to the same introducing tube to introduce the sample gas 50Z, and the same sample gas 50Z is introduced into the dilution side gas cell 10ZB and the non-dilution side gas cell 60ZB.

In one end side of the dilution side gas cell 10ZB, the dilution side gas cell 10ZB has a gas introduction section 12Z formed in the dilution side introduction space 11ZB and configured to introduce the sample gas 50Z, and a dilution gas introduction section 14Z formed in the vicinity of the gas introduction section 12Z. A dilution gas supplied from a dilution gas supply unit 90Z is introduced into the dilution side introduction space 11ZB via the dilution gas introduction section 14Z. As the dilution gas is introduced into the dilution side introduction space 11ZB, after the sample gas 50Z is diluted, a diluted sample gas 51ZB is obtained. In addition, in the other end side of the dilution side gas cell 10ZB, the dilution side gas cell 10ZB has a gas discharge section 13Z configured to discharge the diluted sample gas 51ZB in the dilution side introduction space 11ZB to the outside.

In addition, in the seventh embodiment, the sample gas 50Z is diluted at a dilution rate 20% to obtain the diluted sample gas 51ZB. Further, an inert gas with respect to the infrared light, for example, argon, xenon, nitrogen, and so on, can be used as the dilution gas.

In the non-dilution side gas cell 60ZB, the gas introduction section 62Z configured to introduce the sample gas 50Z into the non-dilution side introduction space 61ZB is installed at one end side of the non-dilution side gas cell 60ZB, and the gas discharge section 63Z configured to discharge the sample gas 50Z introduced into the non-dilution side introduction space 61ZB to the outside is installed at the other end side of the non-dilution side gas cell 60ZB.

The light source unit 20Z includes a housing 25Z coupled to the dilution side gas cell 10ZB and the non-dilution side gas cell 60ZB, an infrared light source 21Z disposed in the housing 25Z, an opening 26Z formed at an area in the housing 25Z opposite to the infrared light source 21Z and configured to guide the infrared light emitted from the infrared light source 21Z to the outside of the housing 25Z, and a window member 23Z configured to cover the opening 26Z. The infrared light emitted from the infrared light source 21Z is introduced into the dilution side gas cell 10ZB and the non-dilution side gas cell 60ZB via the window member 23Z. Here, the infrared light source 21Z configured to emit light having a wavelength range of 4.2 $\mu$m to 4.3 $\mu$m is used. In addition, the window member 23Z is formed of a material having a high transmittance with respect to the infrared rays.

The light receiving unit 30Z includes a reference light receiving element 31Z (corresponding to "a reference light receiving means" of the claims) and a signal light receiving element 32Z (corresponding to "a signal light receiving means" of the claims) disposed on a base 35Z, a cap 36Z configured to cover the reference light receiving element 31Z and the signal light receiving element 32Z, a partition wall 37Z extending from the cap 36Z to a region between the reference light receiving element 31Z and the signal light receiving element 32Z, openings 38Z formed at areas in the cap 36Z opposite to the reference light receiving element 31Z and the signal light receiving element 32Z, and a band-pass filter 39Z configured to cover the openings 38Z. The reference light receiving element 31 Z and the signal light receiving element 32Z output the energy value of the received infrared light to the calculation circuit 3Z. The band-pass filter 39Z configured to allow only the light having a wavelength range of 4.2 $\mu$m to 4.3 $\mu$m to pass therethrough is used. In addition, the reference light receiving element 31Z is opposite to the other end of the dilution side introduction space 11ZB, and the signal light receiving element 32Z is opposite to the other end of the non-dilution side gas cell 60ZB.

Further, while not shown, when the band-pass filter 39Z is not installed at a position shown in FIG. 17, the band-pass filter may be installed at a position of the window member 23Z of FIG. 17. That is, the position at which the band-pass filter is disposed is not particularly limited as long as it is disposed on an optical path between the light source unit 20Z and the light receiving unit 30Z.

According to the above-mentioned configuration, among the infrared light emitted from the infrared light source 21Z, the infrared light entering the reference light receiving element 31Z passes through the diluted sample gas 51ZB diluted in the dilution side introduction space 11ZB. The infrared light entering the signal light receiving element 32Z passes through the sample gas 50Z in the non-dilution side introduction space 61ZB. In this way, the infrared light received by the reference light receiving element 31Z passes through the diluted sample gas 51ZB, a concentration of which is diluted by the dilution gas, in comparison with the infrared light received by the signal light receiving element 32Z. That is, as the concentrations of the sample gases 50Z (50Z, 51ZB) are different, the reference light receiving element 31Z and the signal light receiving element 32Z can simultaneously receive the infrared lights having different absorption amounts by the carbon dioxide in the sample gases 50Z (50Z, 51ZB). In addition, the diluted sample gas 51ZB has a lower concentration than the sample gas 50Z, and when the infrared light passes therethrough, the absorption amount by the carbon dioxide is low. For this reason, the reference light receiving element 31Z receives the infrared light having a high energy value in comparison with the signal light receiving element 32Z.

(Stored Information of Storage Unit 4Z)

Next, information stored in the storage unit 4Z will be described. An approximate equation representing a correlation between the concentration of the carbon dioxide and the ratio of the energy values of the infrared lights received by the reference light receiving element 31Z and the signal light receiving element 32Z is previously stored in the storage unit 4Z.

In general, provided that an energy value of infrared rays from a light source is I0, an energy value of infrared rays arriving at a light receiving means is I, an optical path length from the light source to the light receiving means is 1, a concentration of a target gas is C, and an absorption coefficient is $\mu$, according to Lambert-Beer's Law, a relation represented by the following Equation (1) is satisfied.

$$I = I0\exp(-\mu \cdot C \cdot l)\ldots(1)$$

Based on the relation, using Lambert-Beer's Law, at each concentration C of the carbon dioxide in the sample gas 50Z introduced into the dilution side introduction space 11ZB and the non-dilution side introduction space 61ZB, the energy value A received by the reference light receiving element 31Z and the energy value B received by the signal light receiving element 32Z are previously calculated.

When the energy value B received by the signal light receiving element 32Z is calculated, the already known I0, $\mu$, C and 1 are substituted into Equation (1) to obtain I, and the energy value B is calculated. Here, in Equation (1), the concentration C represents a concentration of the carbon dioxide in the sample gas 50Z.

Next, even in the energy value A received by the reference light receiving element 31Z, each concentration C of the carbon dioxide in the sample gas 50Z is calculated using Equation (1). Here, the infrared light received by the reference light receiving element 31Z passes through the diluted sample gas 51ZB. Accordingly, a concentration C4 of the carbon dioxide in the diluted sample gas 51B is calculated from the concentration C of the carbon dioxide in the sample gas 50Z. As the calculated concentration C4 and already known I0, $\mu$ and 1 are substituted into Equation (1) to obtain I, the energy value A is calculated. Accordingly, when the sample gas 50Z having the carbon dioxide of the concentration C is introduced into the dilution side introduction space 11ZB, the energy value A received by the reference light receiving element 31Z can be calculated using Equation (1). In addition, in the seventh embodiment, the diluted sample gas 51ZB is obtained by diluting the sample gas 50Z at a dilution rate of 20%. For this reason, the concentration C of the carbon dioxide in the sample gas 50Z is also diluted at a dilution rate of 20%. In this way, as the dilution rate is used, the concentration C4 of the carbon dioxide in the diluted sample gas 51ZB can be calculated and obtained from the concentration C of the carbon dioxide in the sample gas 50Z.

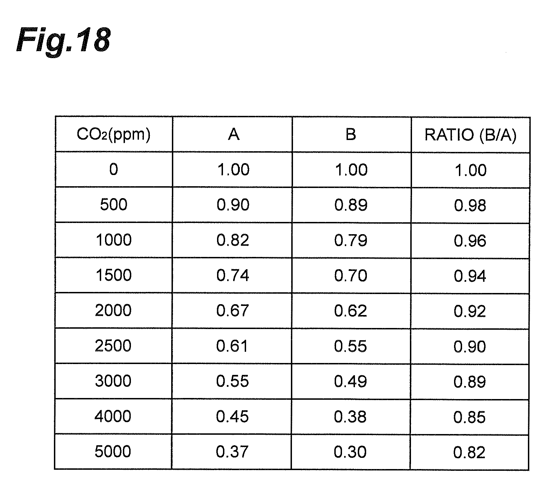

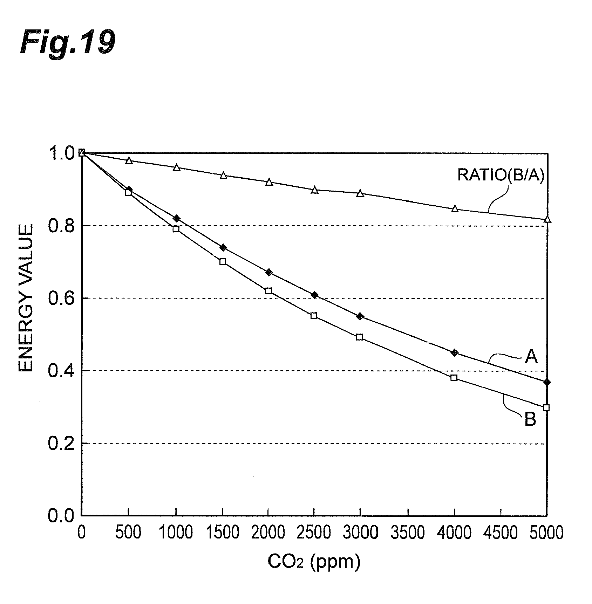

Further, a ratio (B/A) between the energy value B and the energy value A is calculated. These calculated values correspond to the concentration of the carbon dioxide in the sample gas 50Z to draft a database representing a correlation between the concentration of the carbon dioxide and the ratio of the energy values as shown in FIG. 18. Furthermore, from the database represented in FIG. 18, a graph showing the correlation between the concentration of the carbon dioxide and the ratio of the energy values as shown in FIG. 19 is obtained, and an approximate equation (for example, a concentration = f(ratio)) of the ratio (B/A) of the energy values and the concentrations of the carbon dioxide is calculated. The calculated approximate equation is stored in the storage unit 4Z.

In addition, for the convenience of drafting the database, the database of FIG. 18 is standardized such that the energy values A and B become 1 when the concentration of the carbon dioxide in the sample gas 50Z is zero ppm.

As the ratio between the energy value A received by the reference light receiving element 31Z and the energy value B received by the signal light receiving element 32Z corresponds to the concentration of the carbon dioxide in the sample gas 50Z, using the calculated approximate equation, based on the ratio of the energy values of the lights actually received by the reference light receiving element 31Z and the signal light receiving element 32Z, the concentration of the carbon dioxide in the sample gas 50Z can be calculated.

(Concentration Calculation Processing of Carbon Dioxide)

Next, a flow of processing in which the calculation circuit 3Z calculates the concentration of the carbon dioxide from the energy values of the lights received by the reference light receiving element 31Z and the signal light receiving element 32Z will be described. In addition, the calculation circuit 3Z is a circuit including a CPU or the like. FIG. 15 is a flowchart showing a flow of carbon dioxide concentration calculation processing.

In step S101Z, the calculation circuit 3Z obtains the energy value A of the light received by the reference light receiving element 31Z and the energy value B of the light received by the signal light receiving element 32Z.

Next, in step S102Z, the calculation circuit 3Z calculates the ratio (B/A) between the obtained energy values B and A. In step S103Z, the calculation circuit 3Z calculates the concentration of the carbon dioxide from the ratio (B/A) calculated in step S102Z using the approximate equation stored in the storage unit 4Z. As the concentration is calculated using the approximate equation, the calculation processing can be easily performed.

In step S104Z, the calculation circuit 3Z outputs a signal representing the calculated concentration of the carbon dioxide to a control device (not shown) or the like.

The signal representing the concentration of the carbon dioxide is used for, for example, control of air-conditioning or the like, in the control device.

(Operations and Effects of Seventh Embodiment)

In the seventh embodiment, the reference light receiving element 31Z receives the infrared light passing through the dilution side introduction space 11ZB. The signal light receiving element 32Z receives the infrared light passing through the non-dilution side introduction space 61ZB. In addition, a dilution gas from the dilution gas introduction section 14Z is introduced into the dilution side introduction space 11ZB to dilute the sample gas 50Z to obtain the diluted sample gas 51ZB. Accordingly, the concentration of the carbon dioxide in the diluted sample gas 51ZB and the concentration of the carbon dioxide in the sample gas 50Z in the non-dilution side introduction space 61ZB become different. For this reason, the infrared lights passing through introduction spaces (the dilution side introduction space 11 ZB and the non-dilution side introduction space 61ZB) having different concentrations of the carbon dioxide, i.e., the infrared light having different absorption amounts by the carbon dioxide, can be simultaneously measured by the reference light receiving element 31Z and the signal light receiving element 32Z.

In addition, the gas concentration calculating device 1ZB is configured to measure the infrared lights having different absorption amounts, without using the comparison gas chamber or the like, in which gases representing different variation characteristics due to being in a saturated state although being of the same kind as the gas to be measured are hermetically contained, similar to the gas concentration calculating device disclosed in Cited Document 1. In particular, the same sample gas 50Z is introduced into the dilution side gas cell 10ZB and the non-dilution side gas cell 60ZB to be changed into different concentrations, without preparing the gases (gases in the comparison gas chamber) having different variation characteristics from the beginning as disclosed in Cited Document 1. For this reason, even when intensity, a temperature, or the like of the infrared light source 21Z is varied, since the diluted sample gas 51ZB and the sample gas 50Z are the same gas having different concentrationS, variation characteristics of the measured values of the reference light receiving element 31Z and the signal light receiving element 32Z are equal to each other. As described above, since the variation characteristics of the measured values of the reference light receiving element 31Z and the signal light receiving element 32Z are equal to each other, based on these measured values, the variations in the measured values due to the intensity, temperature, or the like of the infrared light source 21Z can be easily offset, and the gas concentration can be more accurately calculated.

In addition, since the dilution gas is inert with respect to the infrared light emitted from the infrared light source 21Z, even when the intensity, temperature, or the like of the light source is varied, there is no influence on variation characteristics of the measured value in the reference light receiving element 31 Z.

Further, since there is no vibration or the like to vary an optical path length and no position difference or additional noise due to the vibration, a decrease in optical detection accuracy of the gas concentration measuring module can be prevented.

Furthermore, since the dilution gas is introduced into the dilution side introduction space 11ZB, the diluted sample gas 51ZB in the dilution side introduction space 11ZB has a low concentration of carbon dioxide in comparison with the sample gas 50Z in the non-dilution side introduction space 61ZB. In this way, since the dilution gas is introduced into the dilution side introduction space 11ZB, the concentration of the carbon dioxide in the diluted sample gas 51ZB in the dilution side introduction space 11ZB and the concentration of the carbon dioxide in the sample gas 50Z in the non-dilution side introduction space 61ZB can be easily changed into different concentrations.

In addition, as argon, xenon and nitrogen are used as the dilution gas, using a phenomenon that no attenuation occurs when the infrared light passes through these gases, the dilution can be performed without varying characteristics of the sample gas 50Z.

Further, the lights respectively received by the reference light receiving element 31Z and the signal light receiving element 32Z can have the same wavelength by the band-pass filter 39Z, and thus a decrease in optical detection accuracy can be suppressed as the wavelengths of the lights respectively received by the reference light receiving element 31Z and the signal light receiving element 32Z are different.

Furthermore, as the infrared light source 21Z emits the infrared rays, using a phenomenon that the energy is attenuated by the carbon dioxide when the infrared rays pass through the sample gas 50Z and the diluted sample gas 51ZB, the concentration of the carbon dioxide in the sample gas 50Z and the diluted sample gas 51ZB can be calculated.

In addition, using a phenomenon that the energy is attenuated when the infrared light passes through the carbon dioxide in the sample gas 50Z and the diluted sample gas 51ZB, the concentration of the carbon dioxide in the sample gas 50Z and the diluted sample gas 51ZB can be calculated.

Further, the approximate equation is previously stored in the storage unit 4Z, and thus, the concentration of the target gas can be accurately calculated based on the approximate equation.

Another aspect of the present invention is not limited to the above-mentioned fifth to seventh embodiments.

For example, in step S103Z of FIG. 15, while the calculation circuit 3Z calculates the concentration of the carbon dioxide using the approximate equation, the concentration of the carbon dioxide may be calculated without using the approximate equation. In this case, the databases shown in FIGS. 13 and 18 are previously stored in the storage unit 4Z as tables. The calculation circuit 3Z may compare the obtained energy values A and B with the table stored in the storage unit 4Z and directly calculate the concentration from the table. In this case, the concentration can be calculated using the table, with no need to calculate the approximate equation between the ratio (B/A) of the energy and the concentration of the carbon dioxide from the databases shown in FIGS. 13 and 18.

In addition, in the fifth to seventh embodiments, while the case in which the concentration of the carbon dioxide is calculated by the gas concentration calculating device 1Z, 1ZA or 1ZB has been described, it is needless to say that concentrations of the other gases can be calculated. Further, according to the gas whose concentration is to be measured, as the kind of the light source or the band-pass filter, or the kind of the dilution gas are appropriately varied, the concentration of the gas can be calculated. Furthermore, the temperature increased by the heater in the fifth and sixth embodiments or the dilution rate of the sample gas 50Z diluted in the seventh embodiment may be appropriately optimized from a measurement range, accuracy, or the like of the gas whose concentration is to be measured.

In addition, the concentration of the gas calculated by the gas concentration calculating device 1Z, 1ZA or 1ZB can be applied to various instruments for calculating the concentration of the gas, in addition to control of air-conditioning.

Further, in the fifth and sixth embodiments, while the sample gas 50Z is increased in temperature using the heater 15Z, 15ZA or 65ZA and the concentration of the sample gas 50Z is changed, in addition to this, for example, the sample gas 50Z may be cooled by a cooler to change the concentration.

**Reference Signs List**

1X, 1XA, 1XB, 1XC...gas concentration calculating device, 2X, 2XA...gas concentration measuring module, 3X, 3XA to 3XD...calculation circuit, 10X, 10XA, 110X, 210X...gas cell, 11X, 11XA...introduction space, 20X...light source unit, 21X...infrared light source, 22X, 122XA to 122XD...band-pass filter, 30X, 130XA to 130XD, 230XA to 230XD...light receiving unit, 31X, 31XA, 131XA to 131XD, 231XA to 231XD... reference light receiving element, 32X, 32XA, 132XA to 132XD, 232XA to 232XD...signal light receiving element, 40X, 140XA to 140XD...inert gas chamber, 41X...inert gas, 121XA to 121XD...light source.

1Y...gas concentration calculating device, 30Y, 30YA, 30YB...light receiving unit, 31Y, 31YB...reference light receiving element, 32Y, 32YB...signal light receiving element, 34Y, 34YB...light receiving element chip, 35Y...package substrate, 36Y, 36YA...package cap, 36aY, 36bY...package cap opening, 37Y...inner cap, 37aY, 37bY...inner cap opening, 37cY...inner cap partition plate, 37dY... partition plate, 38Y...band-pass filter, 39YA, 39YB...cylindrical cap, A...region.

1Z, 1ZA, 1ZB...gas concentration calculating device, 2Z...gas concentration measuring module, 3Z...calculation circuit, 4Z...storage unit, 10Z...temperature rising side gas cell, 10ZA...high temperature side gas cell, 10ZB...dilution side gas cell, 11Z...temperature rising side introduction space, 11ZA...high temperature side introduction space, 11ZB...dilution side introduction space, 15Z...heater, 15ZA...high temperature side heater, 20Z...light source unit, 21Z...infrared light source, 30Z...light receiving unit, 31Z...reference light receiving element, 32Z...signal light receiving element, 39Z...band-pass filter, 60Z...normal temperature side gas cell, 60ZA...low temperature side gas cell, 60ZB...non-dilution side gas cell, 61Z...normal temperature side introduction space, 61ZA...low temperature side introduction space, 61ZB...non-dilution side introduction space, 65ZA...low temperature side heater, 70Z...thermal insulating member, 80Z...dilution gas supply unit.

**Claims**

1. A gas concentration calculating device including a gas concentration measuring module and a gas concentration calculating module and configured to calculate a concentration of a target gas,
 wherein the gas concentration measuring module comprises:

   a gas cell configured to form an introduction space into which the target gas is introduced;
   a light source disposed at one end of the gas cell;
   a signal light receiving means and a reference light receiving means disposed at the other end of the gas cell and configured to receive light emitted from the light source; and
   an inert gas chamber disposed on an optical path between the light source and the reference light receiving means in the introduction space and into which an inert gas, inert with respect to light emitted from the light source, is hermetically enclosed, and
   wherein the gas concentration calculating module calculates the concentration of the target gas based on a ratio between an energy value of the light received by the signal light receiving means and an energy value of the light received by the reference light receiving means of the gas concentration measuring module.

2. The gas concentration calculating device according to claim 1, wherein the inert gas comprises at least any one of argon, xenon, and nitrogen.

3. A gas concentration calculating device including a gas concentration measuring module and a gas concentration calculating module and configured to calculate a concentration of a target gas,
 wherein the gas concentration measuring module comprises:

   a gas cell configured to form an introduction space into which the target gas is introduced;
   a light source disposed at one end of the gas cell; and
   a signal light receiving means and a reference light receiving means disposed at the other end side of the gas cell, configured to receive light emitted from the light source, and disposed at positions having different distances that light emitted from the light source passes through the introduction space, and
   wherein the gas concentration calculating module calculates the concentration of the target gas based on a ratio between an energy value of the light received by the signal light receiving means and an energy value of the light received by the reference light receiving means of the gas concentration measuring module.

4. The gas concentration calculating device according to any one of claims 1 to 3, further comprising a band-pass filter disposed on an optical path between the light source and the light receiving means and through which only light having a predetermined wavelength passes.

5. The gas concentration calculating device according to any one of claims 1 to 4, wherein the light source emits infrared rays.

6. The gas concentration calculating device according to any one of claims 1 to 5, wherein the target gas is carbon dioxide.

7. The gas concentration calculating device according to any one of claims 1 to 6, further comprising a storage means configured to previously store a database or an approximate equation representing a correlation between the concentration and the ratio of the target gas,
 wherein the gas concentration calculating module calculates the concentration corresponding to the ratio based on the database or the approximate equation.

8. The gas concentration calculating device according to any one of claims 1 to 7, comprising the gas concentration measuring module including a plurality of light receiving means corresponding to different target gases, and a plurality of gas concentration calculating modules corresponding to the plurality of light receiving means.

9. A gas concentration measuring module of a gas concentration calculating device for calculating a concentration of a target gas, the gas concentration measuring module comprising:

a gas cell configured to form an introduction space into which the target gas is introduced;
a light source disposed at one end of the gas cell;
a signal light receiving means and a reference light receiving means disposed at the other end of the gas cell and configured to receive light emitted from the light source; and
an inert gas chamber disposed on an optical path between the light source and the reference light receiving means in the introduction space and in which an inert gas, inert with respect to light emitted from the light source, is hermetically enclosed.

10. A gas concentration measuring module of a gas concentration calculating device for calculating a concentration of a target gas, the gas concentration measuring module comprising:

a gas cell configured to form an introduction space into which the target gas is introduced;
a light source disposed at one end of the gas cell; and
a signal light receiving means and a reference light receiving means disposed at the other end side of the gas cell, configured to receive light emitted from the light source, and disposed at positions having different distances that light emitted from the light source passes through the introduction space.

11. A photo detector including a plurality of light receiving elements configured to respectively receive lights on different optical paths, the photo detector comprising:

a shielding means configured to shield light received by one light receiving element and light received by another light receiving element,
wherein the plurality of light receiving elements are formed adjacent to each other on one light receiving element chip.

12. The photo detector according to claim 11, wherein the light receiving element is surrounded by a package substrate on which the light receiving element is placed, and a package cap having a package cap opening formed at a position opposite to the light receiving element and extending from the package substrate to cover the light receiving element, and the shielding means is disposed between the package cap and the light receiving element, and is constituted by
an inner cap having an inner cap opening formed at a position opposite to the light receiving element and extending from the package substrate to cover the light receiving element, and
an inner cap partition plate extending from a surface of the inner cap opposite to the light receiving element to a region between the plurality of light receiving elements.

13. The photo detector according to claim 11, wherein the light receiving element is surrounded by a package substrate on which the light receiving element is placed, and a package cap having a package cap opening formed at a position opposite to the light receiving element and extending from the package substrate to cover the light receiving element, and the shielding means is constituted by a partition plate extending from a surface of the package cap opposite to the light receiving element to a region between the plurality of light receiving elements.

14. The photo detector according to claim 11, wherein the light receiving element is surrounded by a package substrate on which the light receiving element is placed, and a package cap having a package cap opening formed at a position opposite to the light receiving element and extending from the package substrate to cover the light receiving element, and the shielding means is disposed between the package cap and the light receiving element, and is constituted by a cylindrical cap placed on the light receiving element.

15. The photo detector according to any one of claims 12 to 14, further comprising a band-pass filter, through which only light having a predetermined wavelength passes, configured to cover the package cap opening.

16. A photo detector of a gas concentration calculating device configured to detect lights on different optical paths passing through a target gas to calculate a concentration of the target gas, the photo detector comprising:

a plurality of light receiving elements configured to receive the lights on the different optical paths respectively; and
a shielding means configured to shield light received by one light receiving element and light received by another light receiving element,
wherein the plurality of light receiving elements are formed adjacent to each other on one light receiving element chip.

17. A gas concentration calculating device comprising a gas concentration measuring module and a gas concentration calculating module to calculate a concentration of a target gas,

wherein the gas concentration measuring module comprises:

a first gas cell configured to form a first introduction space into which the target gas is introduced;

a second gas cell configured to form a second introduction space into which the target gas is introduced;

a light source disposed at one ends of the first gas cell and the second gas cell;

a reference light receiving means disposed at the other end of the first gas cell and configured to receive light emitted from the light source and passed through the first introduction space;

a signal light receiving means disposed at the other end of the second gas cell and configured to receive light emitted from the light source and passed through the second introduction space; and

a concentration change means configured to change a concentration of the target gas in the first introduction space and a concentration of the target gas in the second introduction space into different concentrations, and

wherein the gas concentration calculating module calculates the concentration of the target gas based on a ratio between an energy value of the light received by the signal light receiving means and an energy value of the light received by the reference light receiving means of the gas concentration measuring module.

18. The gas concentration calculating device according to claim 17, wherein the concentration change means comprises a first heater installed at the first gas cell, and as the target gas in the first introduction space is heated by the first heater, the concentration of the target gas in the first introduction space and the concentration of the target gas in the second introduction space are changed into different concentrations.

19. The gas concentration calculating device according to claim 17, wherein the concentration change means comprises a first heater installed at the first gas cell and a second heater installed at the second gas cell, and as the target gas in the first introduction space and the target gas in the second introduction space are heated to different temperatures, the concentration of the target gas in the first introduction space and the concentration of the target gas in the second introduction space are changed into different concentrations.

20. The gas concentration calculating device according to claim 18 or 19, wherein the gas concentration measuring module further comprises a thermal insulating member disposed between the first gas cell and the second gas cell.

21. The gas concentration calculating device according to claim 17, wherein the concentration change means further comprises an inert gas supply unit configured to introduce an inert gas, inert with respect to light emitted from the light source, into the first introduction space, and

as the inert gas is introduced into the first introduction space from the inert gas supply unit, the concentration of the target gas in the first introduction space and the concentration of the target gas in the second introduction space are changed into different concentrations from each other.

22. The gas concentration calculating device according to claim 21, wherein the inert gas comprises at least any one of argon, xenon, nitrogen, oxygen, and hydrogen.

23. The gas concentration calculating device according to any one of claims 17 to 22, further comprising a band-pass filter disposed on an optical path between the light source and the light receiving means and through which only light having a predetermined wavelength passes.

24. The gas concentration calculating device according to any one of claims 17 to 23, wherein the light source emits infrared rays.

25. The gas concentration calculating device according to any one of claims 17 to 24, wherein the target gas is carbon dioxide.

26. The gas concentration calculating device according to any one of claims 17 to 25, further comprising a storage means configured to previously store a database or an approximate equation representing a correlation between the concentration and the ratio of the target gas,

wherein the gas concentration calculating module calculates the concentration corresponding to the ratio based on the database or the approximate equation.

27. A gas concentration measuring module of a gas concentration calculating device configured to calculate a concentration of a target gas, the gas concentration measuring module comprising:

a first gas cell configured to form a first introduction space into which the target gas is introduced;

a second gas cell configured to form a second introduction space into which the target gas is introduced;

a light source disposed at one ends of the first gas cell and the second gas cell;

a reference light receiving means disposed at the other end of the first gas cell and configured to receive light emitted from the light source and passed through the first introduction space;

a signal light receiving means disposed at the other end of the second gas cell and configured to receive light emitted from the light source and passed through the second introduction space; and

a concentration change means configured to change a concentration of the target gas in the first introduction space and a concentration of the target gas in the second introduction space into different concentrations.

EP 2 538 201 A1

# Fig.1

# Fig.2

| CO$_2$(ppm) | A | B | RATIO (B/A) |
|---|---|---|---|
| 0 | 1.00 | 1.00 | 1.00 |
| 500 | 0.95 | 0.93 | 0.98 |
| 1000 | 0.90 | 0.86 | 0.95 |
| 2000 | 0.82 | 0.74 | 0.90 |
| 4000 | 0.67 | 0.55 | 0.82 |
| 6000 | 0.55 | 0.41 | 0.74 |
| 8000 | 0.45 | 0.30 | 0.67 |
| 10000 | 0.37 | 0.22 | 0.61 |
| 12000 | 0.30 | 0.17 | 0.55 |

Fig.3

# Fig.4

```
                    ( START )
                        |
  +-----------------------------------+
  |      OBTAIN ENERGY VALUES         |~ S101X
  +-----------------------------------+
                        |
  +-----------------------------------+
  |      CALCULATE RATIO (B/A)        |
  |       OF ENERGY VALUES            |~ S102X
  +-----------------------------------+
                        |
  +-----------------------------------+
  |   CALCULATE CONCENTRATION         |
  | FROM APPROXIMATE EQUATION         |~ S103X
  +-----------------------------------+
                        |
  +-----------------------------------+
  | OUTPUT SIGNAL REPRESENTING        |
  |        CONCENTRATION              |~ S104X
  +-----------------------------------+
                        |
                    (  END  )
```

## Fig.5

SAMPLE GAS

1XA

20X

21X

10XA

39X 31XA

3X

CONCENTRATION
SIGNAL

CALCULATION
CIRCUIT

51X 50X 11XA

39X 32XA

4X

STORAGE
UNIT

SAMPLE GAS

Fig.6

SAMPLE GAS

2XA 110X 140XA 140XB 1XB

122XA
121XA
130XA
131XA
CALCULATION CIRCUIT
CONCENTRATION SIGNAL
132XA 3XA
STORAGE UNIT 4XA

122XB
121XB
130XB
131XB
CALCULATION CIRCUIT
CONCENTRATION SIGNAL
132XB 3XB
STORAGE UNIT 4XB

122XC
121XC
130XC
131XC
CALCULATION CIRCUIT
CONCENTRATION SIGNAL
132XC 3XC
STORAGE UNIT 4XC

122XD
121XD
130XD
131XD
CALCULATION CIRCUIT
CONCENTRATION SIGNAL
132XD 3XD
STORAGE UNIT 4XD

51X 11X 140XC
140XD

SAMPLE GAS

Fig.7

# Fig.8

## Fig.9

*Fig.10*

# Fig.11

Fig.12

# Fig.13

| CO$_2$(ppm) | A | B | RATIO (B/A) |
|---|---|---|---|
| 0 | 1.00 | 1.00 | 1.00 |
| 500 | 0.90 | 0.90 | 1.00 |
| 1000 | 0.82 | 0.81 | 0.99 |
| 1500 | 0.74 | 0.73 | 0.99 |
| 2000 | 0.67 | 0.66 | 0.98 |
| 2500 | 0.61 | 0.59 | 0.98 |
| 3000 | 0.55 | 0.54 | 0.98 |
| 4000 | 0.45 | 0.44 | 0.97 |
| 5000 | 0.37 | 0.35 | 0.96 |

Fig.14

*Fig.15*

```
            ( START )
                |
   ┌────────────────────────┐
   │  OBTAIN ENERGY VALUES  │──S101Z
   └────────────────────────┘
                |
   ┌────────────────────────┐
   │  CALCULATE RATIO (B/A)  │──S102Z
   │    OF ENERGY VALUES     │
   └────────────────────────┘
                |
   ┌──────────────────────────────┐
   │  CALCULATE CONCENTRATION     │──S103Z
   │ FROM APPROXIMATE EQUATION    │
   └──────────────────────────────┘
                |
   ┌──────────────────────────────┐
   │ OUTPUT SIGNAL REPRESENTING   │──S104Z
   │       CONCENTRATION          │
   └──────────────────────────────┘
                |
            (  END  )
```

Fig.16

# Fig.17

*Fig.18*

| CO₂(ppm) | A | B | RATIO (B/A) |
|---|---|---|---|
| 0 | 1.00 | 1.00 | 1.00 |
| 500 | 0.90 | 0.89 | 0.98 |
| 1000 | 0.82 | 0.79 | 0.96 |
| 1500 | 0.74 | 0.70 | 0.94 |
| 2000 | 0.67 | 0.62 | 0.92 |
| 2500 | 0.61 | 0.55 | 0.90 |
| 3000 | 0.55 | 0.49 | 0.89 |
| 4000 | 0.45 | 0.38 | 0.85 |
| 5000 | 0.37 | 0.30 | 0.82 |

## Fig.19

<div align="center">

**INTERNATIONAL SEARCH REPORT**

</div>

| | International application No. |
|---|---|
| | PCT/JP2011/053040 |

**A. CLASSIFICATION OF SUBJECT MATTER**
*G01N21/61*(2006.01)i, *G01N21/35*(2006.01)i

According to International Patent Classification (IPC) or to both national classification and IPC

**B. FIELDS SEARCHED**

Minimum documentation searched (classification system followed by classification symbols)
G01N21/00-21/61

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 2007-256242 A (Riken Keiki Co., Ltd.),<br>04 October 2007 (04.10.2007),<br>paragraphs [0015], [0026]; fig. 1<br>(Family: none) | 1,2,4,5,9<br>5-8<br>3,10-27 |
| X<br>Y<br>A | JP 9-257705 A (Ricoh Co., Ltd.),<br>03 October 1997 (03.10.1997),<br>claim 1; paragraphs [0017], [0025]<br>(Family: none) | 3,4,7,8,10<br>5-8<br>1,2,9,11-27 |
| Y<br>A | JP 2004-313795 A (GE Medical Systems<br>Information Technologies, Inc.),<br>11 November 2004 (11.11.2004),<br>paragraph [0004]<br>& US 2004/0207529 A1    & DE 102004018487 A<br>& CN 1539374 A | 6<br>1-5,7-27 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 28 April, 2011 (28.04.11) | 17 May, 2011 (17.05.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2011/053040 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X<br>Y<br>A | JP 2009-188579 A  (Yokogawa Electric Corp.),<br>20 August 2009 (20.08.2009),<br>paragraph [0053]; fig. 3<br>(Family: none) | 11<br>16<br>1-10,12-15,<br>17-27 |
| Y<br>A | JP 2004-117322 A  (Horiba, Ltd.),<br>15 April 2004 (15.04.2004),<br>paragraphs [0004], [0030]<br>(Family: none) | 16<br>1-15,17-27 |
| A | JP 7-190930 A  (Horiba, Ltd.),<br>28 July 1995 (28.07.1995),<br>entire text; all drawings<br>(Family: none) | 1-27 |
| A | JP 9-281034 A  (Meidensha Corp.),<br>31 October 1997 (31.10.1997),<br>entire text; all drawings<br>(Family: none) | 1-27 |
| A | JP 62-126329 A  (Horiba, Ltd.),<br>08 June 1987 (08.06.1987),<br>entire text; all drawings<br>& US 4794255 A          & EP 226855 A2<br>& DE 3650094 C          & DE 3650094 D | 1-27 |
| A | JP 2004-085252 A  (Horiba, Ltd.),<br>18 March 2004 (18.03.2004),<br>entire text; all drawings<br>(Family: none) | 1-27 |
| A | JP 8-247942 A  (Horiba, Ltd.),<br>27 September 1996 (27.09.1996),<br>entire text; all drawings<br>(Family: none) | 1-27 |

Form PCT/ISA/210 (continuation of second sheet) (July 2009)

## INTERNATIONAL SEARCH REPORT

| | International application No. |
|---|---|
| | PCT/JP2011/053040 |

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:
    See extra sheet.

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**     ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

**INTERNATIONAL SEARCH REPORT**

International application No.

PCT/JP2011/053040

<u>Continuation of Box No.III of continuation of first sheet(2)</u>

An invention such that an infrared light source (61) is disposed at one end of a gas cell into which a gas to be detected is introduced, a gas chamber (35) in which an inert nitrogen gas is enclosed and a gas chamber (36) in which the gas to be detected having a fixed concentration is enclosed are disposed at the other end of the gas cell, and the concentration of the gas to be detected is calculated based on the output signals generated from infrared sensors (15), (16) which receive infrared rays emitted from the infrared light source (61) and transmitting through the afore-said gas chambers (35), (36) respectively is described in JP 2007-256242 A (hereinafter referred to as "document 1"), paragraphs [0015], [0026], [fig. 1].

Consequently, since there is no difference in configurations between the inventions in claims 1, 2, 5, 9 and the invention described in the document 1, the inventions in claims 1, 2, 5, 9 cannot be considered to be novel in the light of the invention described in the document 1 and have no special technical feature.

Furthermore, also the search on the inventions in claims 4, 6 - 8 has been substantially completed.

In conclusion, two or more inventions including the inventions in claims 1, 2, 4 - 9 as main invention are involved.

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007256242 A
- JP H05180760 B